(19) Europäisches Patentamt
European Patent Office
Office européen des brevets

(11) EP 1 873 532 A1

(12) EUROPEAN PATENT APPLICATION
published in accordance with Art. 153(4) EPC

(43) Date of publication:
02.01.2008 Bulletin 2008/01

(51) Int Cl.:
G01N 35/08 (2006.01)       G01N 27/447 (2006.01)

(21) Application number: 06730705.8

(86) International application number:
PCT/JP2006/306757

(22) Date of filing: 30.03.2006

(87) International publication number:
WO 2006/106884 (12.10.2006 Gazette 2006/41)

(84) Designated Contracting States:
AT BE BG CH CY CZ DE DK EE ES FI FR GB GR
HU IE IS IT LI LT LU LV MC NL PL PT RO SE SI
SK TR

(30) Priority: 30.03.2005  JP 2005099555

(71) Applicant: NANO Fusion Technologies, Inc.
Tokyo 153-0065 (JP)

(72) Inventors:
• YANAGISAWA, Ichiro
c/o NANO FUSION TECHNOLOGIES,IN
Tokyo 1530065 (JP)
• NISHIKAWA, Masana
Science Solutions Int.Lab.Inc.
Tokyo 1530065 (JP)

(74) Representative: Klunker . Schmitt-Nilson . Hirsch
Winzererstrasse 106
80797 München (DE)

(54) ELECTROOSMOSIS PUMP AND LIQUID FEEDING DEVICE

(57)    In an electroosmosis pump (10A), a bubble separation member (40) is provided at an exit side chamber (28) so as to be separated from an exit side electrode (20), a gas vent member (42) is provided at that side section of a pump container (12) which is near the exit side electrode (20), and a gas vent member (44) is provided at that side section of the pump container (12) which is near an entrance side electrode (18). A self-filling mechanism (50) is placed in an entrance side chamber (26), and the self-filling mechanism (50) is composed of a liquid drawing member (52) in contact with an electroosmosis material (16) via the entrance side electrode (18), and of an air vent path (56) formed between a member (54) surrounding a side section of the liquid drawing member (52) and the inner wall of the pump container (12).

FIG. 1

**Description**

TECHNICAL FIELD

The present invention relates to an electroosmotic pump (electroosmosis pump) suitable for use in controlling movement of a liquid in a microfluid chip for use in biotechnology, analytical chemistry, or the like, or for controlling movement of a fluid in a mobile electronic device, as well as to a liquid feeding device incorporating such an electroosmotic pump therein.

BACKGROUND ART

Electroosmotic pumps are pumps for transporting a fluid based on an electroosmotic phenomenon, and are used as fluid moving means in capillaries and microfluid chips, for example.

Based on the fact that an electroosmotic phenomenon manifests itself within a very narrow fluid passage having a width of several hundreds [μm] or less, the capillary diameter is set to several hundreds [μm] or less, or the width of the fluid passage within a microfluid chip is set to several tens [μm], for example, and two electrodes (positive and negative electrodes) are disposed in the capillary or the fluid passage, thereby turning the capillary or the fluid passage into a pump.

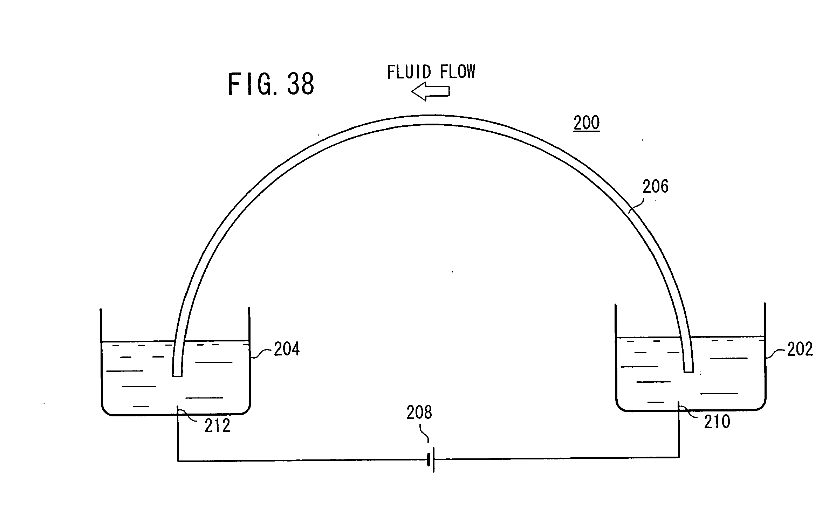

FIG. 38 shows an electroosmotic pump 200 including reservoirs 202, 204, each containing an electrolytic solution, which are connected to each other by a capillary 206 filled with the electrolytic solution. When a DC power supply 208 applies a DC voltage between electrodes 210, 212 disposed respectively in the reservoirs 202, 204, the electrolytic solution is transported from the reservoir 202 to the reservoir 204 through the capillary 206.

The electroosmotic pump 200 is advantageous in that (1) the electroosmostic pump can flow electrolytic solution without pulsations, (2) the electroosmotic pump 200 is easy to use since the electrolytic solution can be displaced simply by inserting the electrodes 210, 212 into the reservoirs 202, 204 and applying a DC voltage therebetween, and (3) the electroosmotic pump 200 has no mechanically movable parts and is simple in structure. Therefore, use of the electroosmotic pump in macroscopic applications of about several [mm], which are constructed of only narrow fluid passages, has been considered.

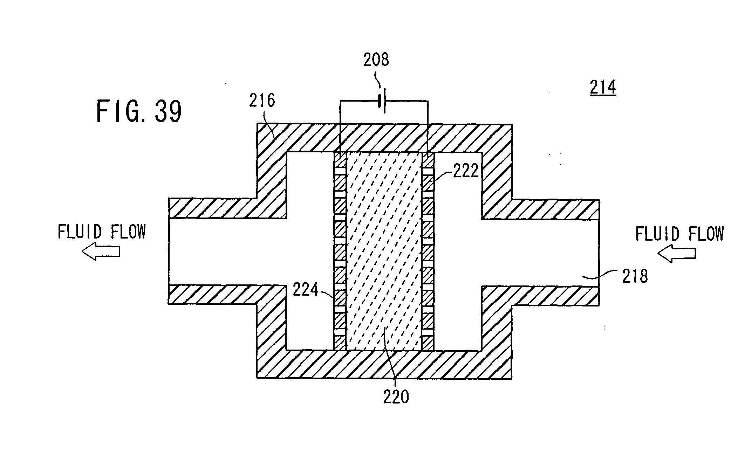

FIG. 39 shows an electroosmotic pump 214, which is a smaller version of the electroosmotic pump 200 (see FIG. 38). The electroosmotic pump 214 comprises an electroosmotic member 220 of an electroosmotic material (hereinafter referred to as an EO material) disposed in a fluid passage 218 defined in a pump case 216, and electrodes 222, 224 disposed on upstream and downstream sides, respectively, of the electroosmotic member 220 and having a plurality of pores defined therein along the direction of the fluid passage. The electrodes are not limited to the illustrated structure, but may also be in the form of wires.

If porous material or a filled structure of minute particles or fibers, or the like, which exhibit electroosmosis, are used as the EO material, then it is possible to transport an electrolytic solution at a flow rate within a range of from [μL/min] to [mL/min] or higher without the need for a capillary 206 (see FIG. 38) and/or a fluid passage within the microfluid chip (see non-patent Documents 1 through 3).

Concerning the DC voltage applied to the electrodes 210, 212, 222, 224 from the DC power supply 208, while the electroosmotic pump 200 (see FIG. 38) needs to have a DC voltage of several tens [kV], the electroosmotic pump 214 allows the electrolytic solution to be moved under a DC voltage of only about several [V].

If the electrolytic solution can be transported under a low voltage at a large flow rate under a desired drive pressure, then electroosmotic pumps are free of the limitations imposed by using the small-diameter capillary 206 and the fluid passage in the microfluid chip, and hence the electroosmotic pump 214 can be used in an increased range of applications.

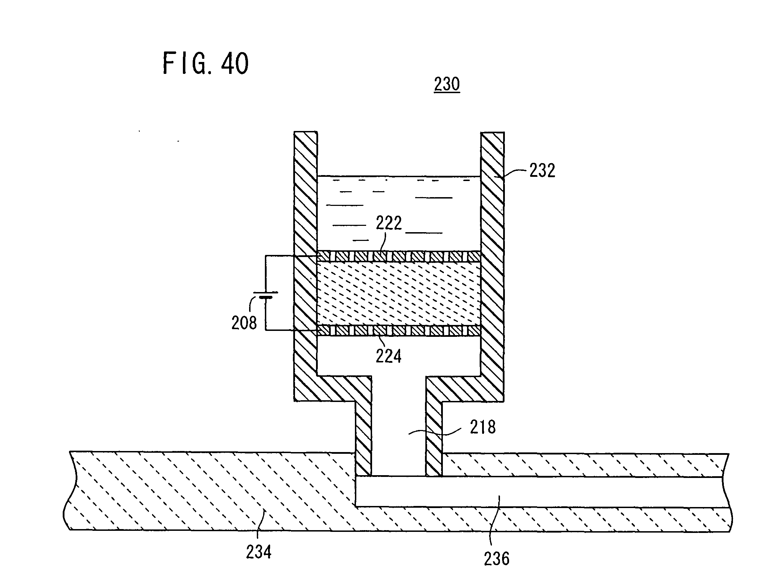

FIG. 40 shows an electroosmotic pump 230 devised by the present applicant. The electroosmotic pump 230 includes a reservoir 232 disposed in an upper portion thereof and containing an electrolytic solution. The electroosmotic pump 230 has a lower portion connected to a fluid passage 236 of a microfluid chip 234. When a DC voltage in the range from several [V] to 30 [V] is applied between electrodes 222, 224, the electrolytic solution is supplied from the reservoir 232 to the fluid passage 236, at a maximum rate of about several tens [μL/min] and under a maximum pressure of 100 [kPa] or higher.

Non-patent Document 1: U.S. Published Application No. 2003/0068229
Non-patent Document 2: U.S. Patent No. 3923426
Non-patent Document 3: U.S. Published Application No. 2004/0234378

## DISCLOSURE OF THE INVENTION

## PROBLEMS TO BE SOLVED BY THE INVENTION

Since electroosmosis is an electrochemical phenomenon, when the DC voltage is applied between the electrodes 222, 224 by the DC power supply 208, gas is produced in the vicinity of the electrodes 222, 224. Any gas which has not been dissolved into the electrolytic solution floats as bubbles in the electrolytic solution, wherein such floating bubbles tend to cause the flow within the fluid passage 236 to become unstable, thus causing an operational failure of the electroosmotic pump 214, and greatly affecting various measurements, such as chemical reactions and chemical analyses that take place downstream from the fluid passage 236.

More specifically, the electroosmotic pump 214 is generally a system wherein ionic electrical conduction in the electrolytic solution and electronic conduction at the electrodes 222, 224 exist together. At the electrodes 222, 224, a gas is produced upon charge exchange therebetween.

For example, in FIG. 39, if the drive liquid is an aqueous solution, wherein the zeta potential of the electroosmotic member 220 has a negative potential, the upstream electrode 222 is a positive electrode, and the downstream electrode 224 is a negative electrode, then when a DC voltage is applied between the electrodes 222, 224 by the DC power supply 208, an electrochemical reaction brings about the following reaction in the vicinity of the electrodes 222, 224:

$$2H_2O \rightarrow 2H_2 + O_2 \qquad (1)$$

As a result, hydrogen gas is produced at the electrode 224 (negative) and oxygen gas is produced at the electrode 222 (positive). If the amount of hydrogen produced near the electrode 224 is in excess of the solubility of the electrolytic solution, bubbles are generated by the hydrogen gas and flow into the system downstream from the electroosmotic pump 214.

When the electroosmotic pump 214 is used to control displacement of a minute fluid in a microfluid chip that is connected downstream from the electroosmotic pump 214, bubbles flowing into the channel of the microfluid chip make it difficult to perform accurate positional control over the minute fluid.

Bubbles also tend to significantly affect a sensor and an actuator in the system. For example, when a thermal flow rate sensor is used to control the flow rate of a minute fluid, bubbles make it difficult for the thermal flow rate sensor to measure the flow rate accurately, with the result that a feedback control cannot be performed with the thermal flow rate sensor.

Through holes defined in the electroosmotic member 220 have a diameter on the order of [$\mu$m] or less. Consequently, oxygen gas produced in the vicinity of the electrode 222 does not pass through the electroosmotic member 220, but covers the surface of the electrode 222 or the electroosmotic member 220. As a result, the area of contact between the electrode 222 or the electroosmotic member 220 and the aqueous solution is reduced, thereby distorting the electric field distribution within the electroosmotic member 220, and obstructing the flow of the electrolytic solution through the electroosmotic member 220. Therefore, the performance of the pump is lowered due to flow rate reduction, flow shutdown, or the like.

If the electric field intensity between the electrodes 222, 224 is increased for the purpose of increasing the pump flow rate, then the increased electric field intensity causes more bubbles to be generated.

The electroosmotic pump 214 often employs an electrolytic solution (buffer solution or the like) having a high electric conductivity as a drive liquid for the purpose of stabilizing electroosmosis. The electric current that flows between the electrodes 222, 224 increases by necessity when the DC voltage is applied to the electrodes 222, 224, thus promoting the generation of gas.

When the electroosmotic pump 214 is applied to biology, medical treatments, and microelectronics-related devices, therefore, the above gas generation problem needs to be solved in order to stabilize pump performance and increase pump efficiency.

Some countermeasures have heretofore been considered with respect to the generation of gas. According to a first countermeasure, the electrodes are made of an ion-conductive material, wherein the ion-conductive material is electrically connected to an electron conductor outside of the electroosmotic pump 214, so that gas is generated outside of the electroosmotic pump 214. Although the problem of gas generation within the electroosmotic pump 214 can be avoided, the entire system tends to be complex, since there is a need to convert ionic conduction into electron conduction outside of the electroosmotic pumps 200, 214, 230.

According to the second countermeasure, the fluid passage of the electroosmotic pump 214 is constructed as a closed-loop fluid passage, wherein oxygen gas and hydrogen gas that are produced are converted into water, by means of a recombiner employing a catalyst. However, since the size of the electroosmotic pump 214 to which the present invention relates is in a range of from several [mm] to several [cm], so that the pump can be housed within a small mobile device and installed on a microfluid chip, use of a recombiner increases the size of the pump and makes the pump complex in structure.

A tank or a cartridge is connected to the upstream side of the electroosmotic pump 214 for supplying an electrolytic solution to the electroosmotic member 220. If the electroosmotic pump 214 is used as a general-purpose device over a wide range of applications, then it is necessary to supply the electroosmotic member 220 reliably with the electrolytic solution as well as to reliably discharge the electrolytic solution from the electroosmotic member 220 to devices downstream from the electroosmotic pump 214. The electroosmotic member 220 is made of an impregnation material having a so-called self-priming capability for absorbing the electrolytic solution and discharging it downstream when the electrolytic solution to be driven reaches the upstream surface of the electroosmotic member 220.

With the electroosmotic pump 214, however, when drive liquid flows from the upstream side, if the fluid passage 218 upstream from the electroosmotic member 220 is narrow (several [mm] or less), then the drive liquid finds it hard to expel gas in the vicinity of the electrode 222 while fully filling the upstream region of the electroosmotic member 220, and hence gas is confined in the upstream region of the electroosmotic member 220. Consequently, the drive liquid does not reach the surface of the electrode 222 on the electroosmotic member 220, and the electroosmotic pump 214 may fail to operate or have its pumping capability lowered.

The present invention has been made in view of the above problems. It is an object of the present invention to provide an electroosmotic pump, which is capable of preventing a gas generated near an electrode from flowing downstream.

Another object of the present invention is to provide an electroosmotic pump, which is capable of reliably supplying the electroosmotic member with a drive liquid.

Still another object of the present invention is to provide an electroosmotic pump having a simple structure, which is capable of supplying a liquid filling a liquid container to an external device.

MEANS FOR SOLVING THE PROBLEMS

An electroosmotic pump according to the present invention includes a first electrode and a second electrode disposed upstream and downstream, respectively, of an electroosmotic member disposed in a fluid passage, wherein when a voltage is applied to the first electrode and the second electrode, a drive liquid is caused to flow in the fluid passage through the electroosmotic member, characterized in that a downstream liquid passing member, for preventing gas produced in the vicinity of the second electrode when voltage is applied thereto from passing downstream while permitting passage of the drive liquid therethrough, is disposed downstream from the second electrode on a downstream side of the fluid passage.

With the above arrangement, even when gas is produced near the second electrode by application of the voltage, the downstream liquid passing member disposed downstream from the electroosmotic member allows the drive liquid to pass, while preventing gas from passing therethrough.

Accordingly, gas is prevented from being introduced into any of various fluid devices, such as a microfluid chip or the like, connected to the downstream side of the fluid passage, and the electroosmotic pump can accurately control the position of the liquid that passes through the fluid device, for example.

A downstream gas vent for discharging gas outside of the fluid passage should preferably be disposed between the electroosmotic member and the downstream liquid passing member. In this case, since gas produced in the vicinity of the second electrode is discharged outside through the downstream gas vent, when the electroosmotic pump is operated over a long period of time, the performance of the pump is prevented from being lowered due to bubbles that would otherwise stick to the second electrode and the electroosmotic member. Even if a portion of the gas produced in the vicinity of the first electrode passes through the electroosmotic member, it can still be discharged through the downstream gas vent.

An upstream liquid passing member, for preventing foreign matter from flowing into the electroosmotic member and for passing the drive liquid therethrough when voltage is applied, should preferably be disposed upstream from the electroosmotic member on an upstream side of the fluid passage. Therefore, foreign matter and bubbles are prevented from adhering to the surface of the electroosmotic member, so that the performance of the electroosmotic pump is maintained.

An upstream gas vent, for discharging gas produced in the vicinity of the first electrode when voltage is applied thereto, should preferably be disposed between the electroosmotic member and the upstream liquid passing member. Therefore, gas is prevented from sticking upstream from the electroosmotic member, so that the performance of the electroosmotic pump is prevented from being lowered.

An upstream liquid self-priming mechanism, for self-priming the drive liquid, should preferably be disposed on an upstream side of the fluid passage in contact with the electroosmotic member or the first electrode. Therefore, the electroosmotic member can reliably be supplied with drive liquid.

A downstream liquid self-priming mechanism, for self-priming the drive liquid, should preferably be disposed on a downstream side of the fluid passage in contact with the electroosmotic member or the second electrode. Therefore, drive liquid, which has been discharged from the electroosmotic member, can reliably be supplied to any of various fluid devices that are connected to the downstream side of the fluid passage.

The upstream liquid self-priming mechanism may be disposed in contact with the electroosmotic member and the first electrode for obtaining the same advantages as described above. The downstream liquid self-priming mechanism may also be disposed in contact with the electroosmotic member and the second electrode for obtaining the same advantages as described above.

An electroosmotic pump according to the present invention includes a first electrode and a second electrode, disposed upstream and downstream, respectively, of an electroosmotic member disposed inside a fluid passage, wherein when a voltage is applied to the first electrode and the second electrode, drive liquid is caused to flow in the fluid passage and through the electroosmotic member, characterized in that an upstream liquid self-priming mechanism for self-priming the drive liquid is disposed on an upstream side of the fluid passage, in contact with the electroosmotic member or the first electrode.

With the above arrangement, since the upstream liquid self-priming mechanism and the electroosmotic member are held in contact with each other, when the upstream liquid self-priming mechanism is filled from the outside with the drive liquid, the filled liquid quickly permeates the electroosmotic member from the upstream liquid self-priming mechanism. Then, when a voltage is applied to the electrodes, the drive liquid can reliably be discharged from the electroosmotic member to a downstream side of the fluid passage. As a result, the self-priming capability of the electroosmotic pump is maintained, even if gas is present in the vicinity of the first electrode.

An upstream liquid passing member for preventing foreign matter from flowing into the electroosmotic member and for passing the drive liquid therethrough when the voltage is applied, should preferably be disposed upstream from the electroosmotic member on an upstream side of the fluid passage. Therefore, foreign matter and bubbles are prevented from adhering to the surface of the electroosmotic member, so that the performance of the electroosmotic pump is maintained.

An upstream gas vent, for discharging gas produced in the vicinity of the first electrode when voltage is applied thereto, should preferably be disposed between the electroosmotic member and the upstream liquid passing member. Therefore, gas is prevented from sticking upstream from the electroosmotic member, so that the performance of the electroosmotic pump is prevented from being lowered.

A downstream liquid self-priming mechanism for self-priming the drive liquid should preferably be disposed on a downstream side of the fluid passage, in contact with the electroosmotic member or the second electrode. Therefore, the drive liquid that has been discharged from the electroosmotic member can reliably be supplied through the downstream liquid self-priming mechanism to any of various fluid devices connected downstream from the electroosmotic pump. Since self-priming mechanisms are disposed respectively at upstream and downstream regions, the drive liquid is discharged efficiently from the upstream region to the downstream region, and further can be drawn efficiently from the downstream region toward the upstream region.

The upstream liquid self-priming mechanism may be disposed in contact with the electroosmotic member and the first electrode, for obtaining the same advantages as described above. Further, the downstream liquid self-priming mechanism may be disposed in contact with the electroosmotic member and the second electrode, for obtaining the same advantages as described above.

A downstream liquid passing member, for preventing gas from passing downstream and passing the drive liquid therethrough, should preferably be disposed downstream from the second electrode, on a downstream side of the fluid passage. Consequently, even when gas is produced near the second electrode by application of voltage, the downstream liquid passing member disposed downstream from the electroosmotic member allows the drive liquid to pass, while preventing gas from passing therethrough. Accordingly, gas is prevented from being introduced into any of various fluid devices, such as a microfluid chip or the like, connected to the downstream side of the fluid passage, and further, the electroosmotic pump can accurately control the position of liquid that passes through the fluid device, for example.

A downstream gas vent, for discharging gas produced in the vicinity of the second electrode when voltage is applied thereto, should preferably be disposed between the electroosmotic member and the downstream liquid passing member. In this case, since gas produced in the vicinity of the second electrode is discharged through the downstream gas vent, when the electroosmotic pump is operated over a prolonged period of time, performance of the pump is prevented from being lowered by bubbles that would stick to the second electrode and the electroosmotic member. Even if a portion of the gas produced in the vicinity of the first electrode passes through the electroosmotic member, it can be discharged through the downstream gas vent.

Preferably, the liquid passing member is made of a hydrophilic material, the gas pressure required for gas to pass through the liquid passing member is 1 [kPa] or higher, and the liquid passing member has a thickness of 3 [mm] or less along the direction of the fluid passage.

Preferably, the gas vent is made of a hydrophobic material disposed on a side wall of the fluid passage, a pressure under which the drive liquid passes through the gas vent is smaller than a maximum pressure of the drive liquid when the electroosmotic pump is in operation, and the gas vent has a thickness of 3 [mm] or less along the direction in which the gas passes.

Preferably, the liquid self-priming mechanism comprises a self-priming member disposed in the vicinity of the electroosmotic member along the fluid passage, and an air vent disposed alongside of the self-priming member and having an impregnation pressure different from that of the self-priming member, wherein the self-priming member is self-primed with the drive liquid, and supplies the drive liquid to the electroosmotic member. Further, the air vent discharges air remaining upstream from the electroosmotic member based on an impregnation pressure difference between the self-priming member and the air vent.

The self-priming member should preferably be made of a hydrophilic material, whereas the air vent should preferably be made of a hydrophobic material.

Preferably, the electroosmotic member or the first electrode and the upstream liquid passing member are spaced from each other by an interval of 3 [mm] or less along the direction of the fluid passage, and/or the electroosmotic member or the second electrode and the downstream liquid passing member are spaced from each other by an interval of 3 [mm] or less along the direction of the fluid passage. Specifically, the interval between the electroosmotic member or the first electrode and the upstream liquid passing member, and/or the interval between the electroosmotic member or the second electrode and the downstream liquid passing member, are important parameters that affect the characteristics of the electroosmotic pump. The interval at a time when surface tension is more dominant than gravitation is about 3 [mm], and the interval at a time when the resistance posed by the fluid passage is very large is less than 1 [µm]. Therefore, it is preferable for each of the intervals to be set to an appropriate value, lying within a range from an upper value of 3 [mm] to a lower value of 1 [µm] (1 [µm] to 3 [mm]), in terms of the characteristics of the electroosmotic pump.

Particularly, if the upstream liquid passing member and the upstream gas vent are disposed in confronting relation to the electroosmotic member and the first electrode, then the interval between the electroosmotic member or the first electrode and the upstream liquid passing member, as well as the interval between the electroosmotic member or the first electrode and the upstream liquid passing member, should preferably be set to a value within the above range. Similarly, if the downstream liquid passing member and the downstream gas vent are disposed in confronting relation to the electroosmotic member and the second electrode, the interval between the electroosmotic member or the second electrode and the downstream liquid passing member, as well as the interval between the electroosmotic member or the second electrode and the downstream liquid passing member, should preferably be set to a value within the above range.

A drive liquid absorbing member, which can closely contact with the upstream liquid self-priming mechanism and the electroosmotic member or the first electrode, and which is made of a hydrophilic material, should preferably be disposed between the upstream liquid self-priming mechanism and the electroosmotic member or the first electrode. In addition, or alternatively, a drive liquid absorbing member, which can closely contact with the downstream liquid self-priming mechanism and the electroosmotic member or the second electrode, and which is made of a hydrophilic material, should preferably be disposed between the downstream liquid self-priming mechanism and the electroosmotic member or the second electrode.

If the upstream liquid self-priming mechanism is made of a rigid material, then since the drive liquid absorbing member closely contacts with the surface of the upstream liquid self-priming mechanism and to the surface of the electroosmotic member or the first electrode, the drive liquid that has been introduced into the upstream liquid self-priming mechanism by way of self-priming can efficiently be absorbed by the drive liquid absorbing member, and be supplied quickly to the electroosmotic member. The drive liquid absorbing member should desirably be made of a pliable, water-retentive, water-absorbing material, which is sandwiched between the upstream liquid self-priming mechanism and the electroosmotic member or the first electrode, in order to increase contact of the drive liquid absorbing member. Furthermore, since the drive liquid absorbing member also functions as a cushion between the upstream liquid self-priming mechanism and the electroosmotic member or the first electrode, the components can be assembled efficiently.

If a drive liquid absorbing member is disposed between the downstream liquid self-priming mechanism and the electroosmotic member or the second electrode, wherein the downstream liquid self-priming mechanism is made of a rigid material, then since the drive liquid absorbing member closely contacts with the surface of the downstream liquid self-priming mechanism, as well as to the surface of the electroosmotic member or the second electrode, the drive liquid that has been introduced into the downstream liquid self-priming mechanism by way of self-priming can efficiently be absorbed by the drive liquid absorbing member and be supplied quickly to the electroosmotic member. In this case, the drive liquid absorbing member should desirably be made of a pliable, water-retentive, water-absorbing material, which is sandwiched between the downstream liquid self-priming mechanism and the electroosmotic member or the second electrode, in order to increase contact of the drive liquid absorbing member. Furthermore, since the drive liquid absorbing member also functions as a cushion between the downstream liquid self-priming mechanism and the electroosmotic member or the second electrode, the components can be assembled efficiently.

In each of the inventions described above, the fluid passage should preferably be defined inside a pump casing, which accommodates therein the electroosmotic member, the first electrode, and the second electrode. The fluid passage should preferably have an upstream inlet and a downstream outlet, which are defined in one surface of the pump casing. Therefore, the electroosmotic pump can be easily installed on an installation surface such as a board or the like, and can be reduced in overall height. Since the inlet and the outlet are defined in one surface, gas vents can be disposed on the opposite surface.

Consequently, the electroosmotic pump according to the present invention is suitable for use as a small-size surface-mounted pump, installed within electronic devices, for example.

A liquid feeding device according to the present invention comprises the above electroosmotic pump, and a liquid container filled with a liquid, wherein liquid stored in the liquid container is discharged by means of the electroosmotic pump. When a voltage is applied to the first and second electrodes of the electroosmotic pump, liquid stored in the liquid container can be supplied from the liquid container by operation of the electroosmotic pump. The liquid can thus be supplied by means of a simple structure. When voltage is applied to the first and second electrodes, while the liquid is introduced by way of self-priming utilizing the upstream liquid self-priming mechanism, the liquid can be supplied from the liquid container through the electroosmotic member as well as from the upstream liquid self-priming mechanism. As a consequence, liquid can be supplied efficiently. If the liquid in the liquid feeding device is methanol or methanol water, i.e., methanol diluted with water, then the liquid feeding device may be used suitably as a liquid fuel supply cartridge, for supplying methanol or methanol water to a fuel cell system.

BRIEF DESCRIPTION OF THE DRAWINGS

FIG. 1 is a cross-sectional view of an electroosmotic pump according to a first embodiment of the present invention;
FIG. 2 is a partial cross-sectional view, illustrating a self-priming function performed by a first self-priming mechanism;
FIG. 3 is a cross-sectional view of an electroosmotic pump according to a second embodiment of the present invention;
FIG. 4 is an enlarged partial cross-sectional view, showing a combined interfitting of a large-diameter portion and a small-diameter portion, as illustrated in Fig. 3;
FIG. 5 is an enlarged partial cross-sectional view showing a bonded combination of a large-diameter portion and a small-diameter portion, as illustrated in Fig. 3;
FIG. 6 is a cross-sectional view of an electroosmotic pump according to a third embodiment of the present invention;
FIG. 7 is a cross-sectional view of an electroosmotic pump according to a fourth embodiment of the present invention;
FIG. 8 is a partial cross-sectional view showing a structure of a gas vent illustrated in FIG. 7;
FIG. 9 is a vertical cross-sectional view taken along line IX - IX of FIG. 8;
FIG. 10 is a vertical cross-sectional view taken along line X - X of FIG. 8;
FIG. 11 is a partial cross-sectional view showing another structure of the gas vent illustrated in FIG. 7;
FIG. 12 is a partial cross-sectional view showing still another structure of the gas vent illustrated in FIG. 7;
FIG. 13 is a partial cross-sectional view showing a structure of a bubble isolator illustrated in FIG. 7;
FIG. 14 is a partial cross-sectional view showing another structure of the bubble isolator illustrated in FIG. 7;
FIG. 15 is a cross-sectional view of an electroosmotic pump according to a fifth embodiment of the present invention;
FIG. 16 is a cross-sectional view of an electroosmotic pump according to a sixth embodiment of the present invention;
FIG. 17 is a cross-sectional view of an electroosmotic pump according to a seventh embodiment of the present invention;
FIG. 18 is a partial cross-sectional view showing another structure of a self-priming mechanism illustrated in FIG. 17;
FIG. 19 is a partial cross-sectional view showing still another structure of the self-priming mechanism illustrated in FIG. 17;
FIG. 20 is a partial cross-sectional view showing yet another structure of the self-priming mechanism illustrated in FIG. 17;
FIG. 21 is a vertical cross-sectional view taken along line XXI - XXI of FIG. 20;
FIG. 22 is a cross-sectional view of an electroosmotic pump according to an eighth embodiment of the present invention;
FIG. 23 is a cross-sectional view showing another structure of the electroosmotic pump illustrated in FIG. 22;
FIG. 24 is a cross-sectional view of an electroosmotic pump according to a ninth embodiment of the present invention;
FIG. 25 is a cross-sectional view of an electroosmotic pump according to a tenth embodiment of the present invention;
FIG. 26 is a cross-sectional view of an electroosmotic pump according to an eleventh embodiment of the present invention;
FIG. 27 is a cross-sectional view of an electroosmotic pump according to a twelfth embodiment of the present invention;
FIG. 28 is a cross-sectional view showing another structure of the electroosmotic pump illustrated in FIG. 27;
FIG. 29 is a cross-sectional view of an electroosmotic pump according to a thirteenth embodiment of the present invention;

FIG. 30 is a cross-sectional view showing another structure of the electroosmotic pump illustrated in FIG. 28;

FIG. 31 is a cross-sectional view of an electroosmotic pump according to a fourteenth embodiment of the present invention;

FIG. 32 is a cross-sectional view showing another structure of the electroosmotic pump illustrated in FIG. 31;

FIG. 33 is a cross-sectional view showing still another structure of the electroosmotic pump illustrated in FIG. 31;

FIG. 34 is a cross-sectional view showing yet another structure of the electroosmotic pump illustrated in FIG. 31;

FIG. 35 is a cross-sectional view of an electroosmotic pump according to a fifteenth embodiment of the present invention;

FIG. 36 is a cross-sectional view of an electroosmotic pump according to a sixteenth embodiment of the present invention;

FIG. 37 is a cross-sectional view of a liquid feeding device, which incorporates the electroosmotic pump according to the fifteenth embodiment;

FIG. 38 is a partial cross-sectional view showing a conventional electroosmotic pump;

FIG. 39 is a partial cross-sectional view showing another conventional electroosmotic pump; and

FIG. 40 is a partial cross-sectional view showing an electroosmotic pump devised by the present applicant.

## BEST MODE FOR CARRYING OUT THE INVENTION

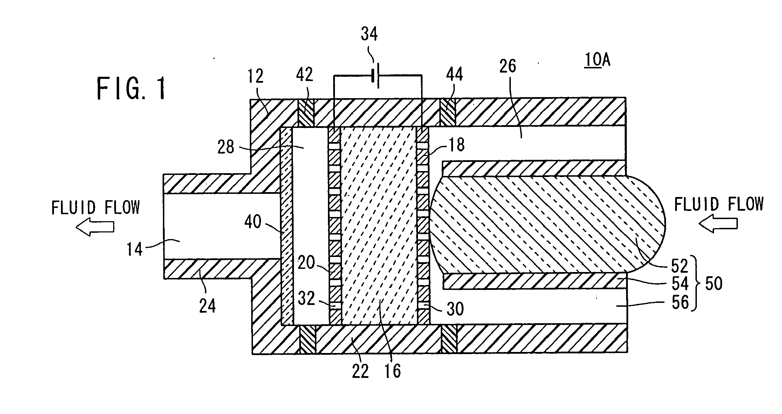

An electroosmotic pump 10A according to a first embodiment is a small-sized pump, having a size ranging from several [mm] to several [cm], so that it can be installed on a microfluid chip or in a small-size electronics device, for use in biotechnology and analytic chemistry. As shown in FIG. 1, the electroosmotic pump 10A basically comprises a pump casing 12, an electroosmotic member 16 disposed in a fluid passage 14 defined in the pump casing 12, an inlet electrode (first electrode) 18, and an outlet electrode (second electrode) 20.

The pump casing 12 is made of a plastic material that is resistant to a drive liquid, such as an electrolytic solution or the like, which passes through the fluid passage 14. The pump casing 12 may also be made of ceramics, glass, or a metal material having an electrically insulated surface. The pump casing 12 includes a large-diameter portion 22 in which the electroosmotic member 16, the inlet electrode 18, and the outlet electrode 20 are disposed, and a small-diameter portion 24, which can be connected to a fluid device such as a microfluid chip or the like, not shown. The electrolytic solution passes through the fluid passage 14 from the right (the large-diameter portion 22) and toward the left (the small-diameter portion 24) in FIG. 1.

The electroosmotic member 16 is disposed so as to divide the fluid passage 14 into a region upstream (right in FIG. 1) from the electroosmotic member 16, thus forming an inlet chamber 26, and a region downstream from the electroosmotic member 16, serving as an outlet chamber 28. The electroosmotic member 16 is made of porous ceramics or glass fibers. The electroosmotic member 16 has a hydrophilic nature, such that when the inlet chamber 26 is supplied with drive liquid, the electroosmotic member 16 absorbs and is impregnated with the liquid, and then discharges the drive liquid into the outlet chamber 28.

The inlet electrode 18 is disposed in the inlet chamber 26 in contact with a surface of the electroosmotic member 16, and has a plurality of pores 30 defined therein along the axial direction of the fluid passage 14. The outlet electrode 20 is disposed in the outlet chamber 28 in contact with a surface of the electroosmotic member 16, and has a plurality of pores 30 defined therein along the axial direction of the fluid passage 14. The inlet electrode 18 and the outlet electrode 20 are electrically connected to a DC power supply 34.

In FIG. 1, the inlet electrode 18 serves as a positive electrode and the outlet electrode 20 as a negative electrode, on the assumption that the electroosmotic member 16 is negatively charged. However, if the electroosmotic member 16 is positively charged, then the inlet electrode 18 may serve as a negative electrode while the outlet electrode 20 serves as a positive electrode. In FIG. 1, the electrodes 18, 20 are disposed on surfaces of the electroosmotic member 16. However, the electrodes 18, 20 are not limited to such a layout, and may be disposed near the electroosmotic member 16, out of contact therewith. In FIG. 1, the DC power supply 34 is electrically connected to the inlet electrode 18 and the outlet electrode 20, and applies a DC voltage to the electrodes 18, 20. However, the voltage applied to the electrodes 18, 20 is not limited to being a DC voltage. Instead, a pulsed power supply, not shown, may be employed in place of the DC power supply 34, for applying a pulsed voltage to the electrodes 18, 20.

In the electroosmotic pump 10A, drive liquid is supplied to the inlet chamber 26 and permeates through the pores 30 of the electroosmotic member 16. When the DC power supply 34 applies a DC voltage to the electrodes 18, 20, the drive liquid through the electroosmotic member 16 moves in a direction from the inlet electrode 18 toward the outlet electrode 20, and is discharged through the pores 32 into the outlet chamber 28.

The electroosmotic pump 10A also has a bubble isolator (downstream liquid passing member) 40 disposed in the outlet chamber 28 downstream from the outlet electrode 20, a gas vent (downstream gas vent) 42 disposed in a side wall of the pump casing 12 in the vicinity of the outlet electrode 20, and a gas vent (upstream gas vent) 44 disposed in a side wall of the pump casing 12 in the vicinity of the inlet electrode 18.

The bubble isolator 40 comprises a hydrophilic membrane made of glass fibers, or a polyamide-based synthetic polymeric material such as hydrophilic Nylon (registered trademark). The bubble isolator 40 passes the drive liquid, which has been discharged downstream through the pores 32 from the electroosmotic member 16, while preventing gas and foreign matter in the outlet chamber 28 from passing therethrough. The gas vent 42 comprises a hydrophobic gas-permeable membrane or sheet made of polytetrafluoroethylene (PTFE) or the like, wherein gas in the outlet chamber 28 is discharged through the gas vent 42 out of the pump casing 12. The gas vent 44 comprises a hydrophobic gas-permeable membrane, similar to the gas vent 42, wherein gas in the inlet chamber 26 is discharged through the gas vent 44 out of the pump casing 12.

In the electroosmotic pump 10A, the drive liquid, such as an electrolytic solution (aqueous solution) or the like, permeates the electroosmotic member 16. When the DC power supply 34 applies a DC voltage to the electrodes 18, 20, hydrogen gas is produced in the vicinity of the outlet electrode 20 whereas oxygen gas is produced in the vicinity of the inlet electrode 18, as a result of an electrochemical reaction that occurs in the drive liquid near the electrodes 18, 20. If the current flowing between the electrodes 18, 20 is 1 [mA], for example, then hydrogen gas is produced at a rate of 7.86 [$\mu$L/min], whereas oxygen gas is produced at a rate of 3.93 [$\mu$L/min].

The solubility of the oxygen gas is 0.031, whereas the solubility of the hydrogen gas is 0.018, when the aqueous solution (or water) has a temperature of 20 [°C]. Even if the solubility of the oxygen and hydrogen gases in the aqueous solution is nil at the time the electroosmotic pump 10A is actuated, when the ratio of the amount of gas produced (volume at one atmospheric pressure) to the flow rate of the aqueous solution exceeds 3.1 [%] (oxygen) and 1.8 [%] (hydrogen), the gas concentration in the aqueous solution exceeds the solubility, thereby causing oxygen gas bubbles to be produced in the inlet chamber 26 near the electrode 18, and also causing hydrogen gas bubbles to be produced in the outlet chamber 28 near the electrode 20. More specific numerical values shall be indicated below. If the pump flow rate is 100 [$\mu$L/min], then oxygen gas bubbles are produced at the inlet electrode 18 at a current of 790 [$\mu$A] or greater, and hydrogen gas bubbles are produced at the outlet electrode 20 at a current of 229 [$\mu$A] or greater.

When such bubbles stick to the surfaces of the electrodes 18, 20 and the electroosmotic member 16, the bubbles tend to prevent the aqueous solution from being supplied to and discharged from the electroosmotic member 16. Furthermore, the electric field distribution around the electroosmotic member 16 becomes distorted, resulting in a reduction in performance of the electroosmotic pump 10A. When the bubbles flow downstream within the fluid passage 14, the bubbles also are introduced into a fluid pressure device, such as a microfluid chip or the like, connected downstream from the electroosmotic pump 10A. Thus, the electroosmotic pump 10A fails to appropriately control the displacement of the minute fluid within the fluid pressure device, or various sensors connected downstream from the electroosmotic pump 10A may be adversely affected during operation.

In the electroosmotic pump 10A, a minimum bubble point of the bubble isolator 40 and a minimum water breakthrough point of the gas vents 42, 44 are set to sufficiently large levels, compared with the pressure at which the aqueous solution is driven. The minimum bubble point refers to the minimum pressure value required for bubbles (hydrogen gas or oxygen gas) to pass through the bubble isolator 40, which has been wetted by the aqueous solution. The bubbles also may comprise gas different from the hydrogen gas and the oxygen gas, depending on the type of drive liquid. The minimum water breakthrough point refers to the minimum pressure value required for the aqueous solution to leak out of the chambers 26, 28 through the gas vents 42, 44.

While the pump is in operation, the pressure in the outlet chamber 28 has a difference (positive pressure) ranging from several [kPa] to several hundreds [kPa] from the external pressure. Therefore, bubbles that accumulate in the outlet chamber 28 are discharged out of the electroosmotic pump 10A through the gas vent 42. When the aqueous solution passes through the bubble isolator 40, it develops a certain pressure loss. Pressure loss can be reduced by selecting an appropriate fluid passage resistance for the bubble isolator 40.

Therefore, bubbles can be discharged out of the electroosmotic pump 10A through the gas vents 42, 44 rather than passing downstream from the electroosmotic pump 10A.

The bubble isolator 40 is designed to satisfy two conditions with respect to the outlet pressure, the minimum bubble point, and the fluid passage resistance, at a time when the pump is in operation, such that (1) the minimum bubble point should be greater than the maximum pressure (the maximum pressure on the outlet side of the electroosmotic pump 10A) of the aqueous solution discharged from the electroosmotic member 16 (minimum bubble point > maximum pressure of the aqueous solution), and (2) the pressure loss across the bubble isolator 40 at the maximum flow rate of the aqueous solution should be sufficiently smaller than the maximum pressure of the aqueous solution discharged from the electroosmotic member 16.

A specific structural example shall be described below.

The bubble isolator 40 comprises a membrane made of hydrophilic Nylon (registered trademark) (pore diameter: 0.2 [$\mu$m], membrane thickness: 127 [$\mu$m]). The minimum bubble point of the bubble isolator 40 is 340 [kPa], and the rate at which the aqueous solution passes through the bubble isolator 40 is 170 [$\mu$l/(min·cm$^2$·kPa)]. The gas vents 42, 44 comprise a membrane of PTFE (pore diameter: 0.2 [$\mu$m], membrane thickness: 139 [$\mu$m]). The water breakthrough

point of the gas vents 42, 44 is 280 [kPa], and the rate at which gas passes through the gas vents 42, 44 is 28 [ml/ (min·cm$^2$·kPa)].

The pressure loss developed in the aqueous solution across the bubble isolator 40, and the cross-sectional area of the gas vent 42 required to discharge hydrogen gas, shall be described below in specific detail.

If it is assumed that the diameter of the electroosmotic member 16 is 7 [mm], the flow rate of the aqueous solution is 200 [μL/min], the rate at which hydrogen gas is produced is 100 [μL/min], and the pressure in the outlet chamber 28 is 50 [kPa]. Further, the pressure loss developed in the aqueous solution across the bubble isolator 40 is 3 [kPa], and the cross-sectional area of the gas vent 42 is 0.007 [MM$^2$]

As described above, the pressure loss developed in the aqueous solution across the bubble isolator 40 is about several [kPa], which is a problem-free numerical value from the standpoint of general pump characteristics of the electroosmotic pump.

The gas vent 42 is capable of discharging hydrogen gas from the electroosmotic pump through a cross-sectional area of about 0.007 [mm$^2$]. If the cross-sectional area is small, then the aqueous solution is prevented from losses caused by evaporation within the electroosmotic pump 10A. In the above specific example, since the thicknesses of the bubble isolator 40 and the gas vent 42 are smaller than 150 [μm], the size of the electroosmotic pump 10A remains essentially unchanged, even when these components are added.

If the diameter of the space (outlet chamber 28) defined by the bubble isolator 40, the electroosmotic member 16, and the inner wall of the pump casing 12 is 2 to 3 [mm] or less, then surface tension is more dominant on the aqueous solution than gravitation. Therefore, the electroosmotic pump 10A is orientation-free, and is not susceptible to gravitational forces no matter what attitude the electroosmotic pump 10A is placed in.

The bubble isolator 40 also is effective to prevent air from flowing from outside back into the inlet chamber 26 and the outlet chamber 28 through the gas vents 42, 44, and to prevent foreign matter which has entered the electroosmotic pump 10A from being discharged downstream, when the pressure of the aqueous solution drops downstream from the system including the electroosmotic pump 10A and the microfluid chip.

As described above, the electroosmotic pump 10A is a small-sized pump, which can be installed on a microfluid chip or a small-sized electronics device, not shown. The inlet chamber 26 has an inside diameter of about several [mm] or less. Therefore, large forces due to surface tension act on the electrolytic solution flowing through the fluid passage 14. When a supply line for the electrolytic solution, or a cartridge or tank filled with the electrolytic solution, is simply connected to the inlet side (on the right in FIG. 1) of the electroosmotic pump 10A, air remains trapped within the inlet chamber 26 when the electrolytic solution is supplied, thus possibly preventing the electroosmotic pump 10A from being activated normally.

Accordingly, the electroosmotic pump 10A includes a self-priming mechanism 50 disposed in the inlet chamber 26. The self-priming mechanism 50 comprises a liquid suction member (self-priming member) 52, having a tip end thereof held in contact with the electroosmotic member 16 through the inlet electrode 18, and an air-bleeding path (air bleeder) 56 defined between a surrounding member 54 that surrounds the sides of the liquid suction member 52 and the inner wall of the pump casing 12.

The liquid suction member 52 is made of a hydrophilic material, such as porous ceramics or glass fibers, which are highly permeable to the electrolytic solution. If the liquid suction member 52 is made of glass fibers, then a surrounding member 54, which is made of the same material as the pump casing 12, serves as a side wall, preventing the glass fibers from being deformed in shape. The surrounding member 54 may be dispensable if the liquid suction member 52 is made of a material, such as a porous ceramic, which is not deformed in shape when placed in the pump casing 12.

The air-bleeding path 56 is constructed as a passage that has a lower impregnation pressure with respect to the electrolytic solution than the liquid suction member 52. The air-bleeding path 56 may simply be a gas-bleeding passage, or it may be filled with a less-impregnation hydrophilic material, or with a hydrophobic material.

When the electroosmotic pump 10A is activated, the liquid suction member 52 is supplied with the drive liquid from outside of the electroosmotic pump 10A. The supplied liquid permeates the liquid suction member 52 and wets the surface of the electroosmotic member 16, which is held in contact with the liquid suction member 52. As a result, the drive liquid seeps spontaneously into the electroosmotic member 16 due to capillary action, until the liquid reaches the surface of the outlet electrode 20 on the side of the outlet chamber 28. The electroosmotic pump 10A is now readied for activation.

The self-priming mechanism 50 must satisfy three conditions, such that (1) it should be capable of wetting the surface of the electroosmotic member 16 with the drive liquid, (2) it should be able to discharge air in the inlet chamber 26 out of the inlet chamber 26, and (3) the time required for (1) and (2) should be equal to or shorter than the activation time required by the electroosmotic pump 10A.

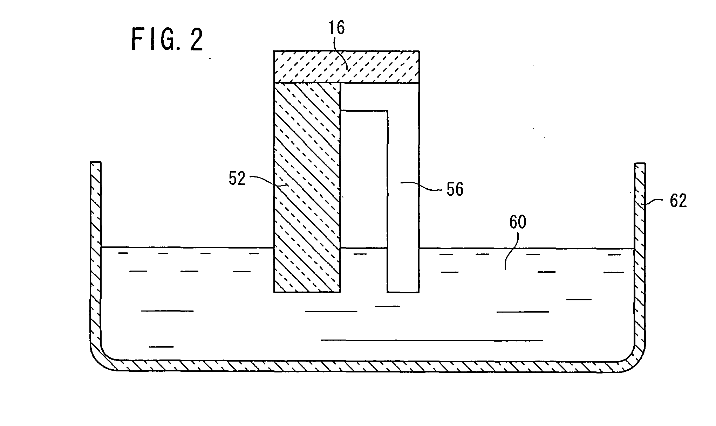

FIG. 2 is a schematic cross-sectional view illustrating principles of a process for supplying the drive liquid from the self-priming mechanism 50 to the electroosmotic member 16. In FIG. 2, the pump casing 12, the inlet electrode 18, the outlet electrode 20, and the surrounding member 46 are omitted from illustration. The liquid suction member 52 and the air-bleeding path 56 have respective ends immersed within an electrolytic solution 60, which forms the drive liquid and is contained in a casing 62.

The impregnation characteristics of the electrolytic solution 60 in the porous medium of the liquid suction member 52 and in the air-bleeding path 56 are determined by the surface energy $\gamma_{so}$ of the porous medium, the surface energy $\gamma_{SL}$ of the interface between the porous medium and the electrolytic solution 60, the surface energy $\gamma$ of the electrolytic solution 60, and the internal surface area of the porous medium. If pores (having a diameter D) in the porous medium are provided in a uniform density along the direction from the surface of the electrolytic solution 60 toward the electroosmotic member 16, then the impregnation pressure P of the electrolytic solution 60 in the liquid suction member 52 is determined by a reduction in the surface energy per unit length, and is given by the following equation (2):

$$P = 4\gamma \times (\gamma_{SL} - \gamma_{SO})/D = 4\gamma\cos\theta/D \qquad (2)$$

where $\cos\theta = (\gamma_{SL} - \gamma_{SO})$.

If the surface tension of water (electrolytic solution) is $\gamma = 73$ [mN/m], D = 10 [$\mu$m], and $\theta = 0$, then the impregnation pressure P is about 28 [kPa]. If D = 100 $\mu$m, then P = 3 [kPa].

In FIG. 2, the liquid suction member 52 disposed in the inlet chamber 26 (see FIG. 1) is constructed as a porous body, having pores with a diameter D = 10 [$\mu$m], and the air-bleeding path 56 is constructed as a porous body, having pores with a diameter D = 100 [$\mu$m]. The porous bodies are placed in the casing 62 containing the electrolytic solution 60.

The electrolytic solution 60 seeps upwardly into the liquid suction member 52 and the air-bleeding path 56, developing a pressure buildup in the liquid suction member 52 and the air-bleeding path 56. Due to the difference between the impregnation pressure (28 [kPa]) in the liquid suction member 52 and the impregnation pressure (3 [kPa]) in the air-bleeding path 56, the electrolytic solution 60 that permeates the liquid suction member 52 pushes the electrolytic solution 60 that permeates the air-bleeding path 56 through air, and reaches the surface of the electroosmotic member 16 earlier than the electrolytic solution 60 that permeates the air-bleeding path 56. As a result, air in the vicinity of the surface of the electroosmotic member 16 flows into the air-bleeding path 56, developing a positive pressure of about 3 kPa in the air-bleeding path 56.

Therefore, the self-priming mechanism 50 satisfies three conditions, from the standpoints of its self-priming capability and discharging of air, such that (1) the liquid suction member 52 with the higher impregnation pressure P should allow the electrolytic solution 60 to reach the surface of the electroosmotic member 16 on the side of the inlet chamber 26, (2) air present in the inlet chamber 26 should be discharged out of the inlet chamber 26 from the air-bleeding path 56 with the lower impregnation pressure P (3 [kPa]), and (3) a positive pressure determined by the lower impregnation pressure P (3 [kPa]) should be developed in the air-bleeding path 56.

According to condition (1), the electroosmotic member 16 can be supplied with the electrolytic solution 60, such that the surface of the electroosmotic member 16 is continuously supplied with the electrolytic solution 60 at the time the electroosmotic pump 10A starts operating. According to the condition (2), the surface of the electroosmotic member 16 can be wetted by the electrolytic solution 60, while permeation of the electrolytic solution 60 is not obstructed by air in the inlet chamber 26. According to the condition (3), the self-priming mechanism 50 can generate a pressure required to discharge gas generated in the inlet chamber 26 (including oxygen gas generated in the vicinity of the electrode 18) out of the pump casing 12, so that the pressure required to discharge oxygen gas generated at the electrode 18 from the gas vent 44 can be generated at the time that the electroosmotic pump 10A is self-primed.

The speed of operation of the self-priming mechanism 50 at the time the electroosmotic pump 10A is activated shall be described below. The time required until the surface of the electroosmotic member 16 on the side of the inlet chamber 26 is wetted by the electrolytic solution 60 serves as a rough indication of the operating speed of the self-priming mechanism 50.

The motion of the electrolytic solution 60 within the liquid suction member 52, which acts as a capillary tube, is determined by the drive force F due to surface tension (F = $2\pi R\gamma\cos\theta$, R: the diameter of the liquid suction member 52), and the pressure determined by the viscous friction and the gravitational force within the capillary tube. If the pressure term due to gravitational force is sufficiently smaller than the drive force due to surface tension (i.e., if the impregnation pressure is sufficiently low), such as when the distance that the solution permeates through the capillary tube is small or when the capillary tube is placed horizontally, then since the gravitational term can be ignored, the relationship between the distance Z over which the electrolytic solution 60 moves, and the time t that it takes the electrolytic solution 60 to move in the liquid suction member 52, is given by the following equation (3):

$$Z^2 = \gamma R\cos\theta \times t/(2\eta) \qquad (3)$$

where t represents the time in which the electrolytic solution 60 moves in the liquid suction member 52, and η the viscous modulus of the liquid suction member 52.

If Z = 20 [mm] (the distance from an upstream connection port of the electroosmotic pump 10A to the surface of the electroosmotic member 16), $\gamma$ = 73 [mN/m], R = 10 [$\mu$m], $\theta$ = 0, and $\eta$ = 0.001 [Pa·s] in equation (3), then t ≅ 1 [s]. Since t becomes longer as R becomes smaller, a tradeoff is required between the speed of operation of the self-priming mechanism 50 and the impregnation pressure within liquid suction member 52.

The electroosmotic pump 10A according to the first embodiment is constructed as described above. Operations and advantages of the electroosmotic pump 10A shall now be described below with reference to FIGS. 1 and 2.

The upstream side of the electroosmotic pump 10A and a tank or cartridge, not shown, are connected to each other, wherein the self-priming mechanism 50 is supplied with the electrolytic solution from the tank or cartridge. Since the liquid suction member 52 has an upstream end projecting from the pump casing 12, when the tank or cartridge and the upstream side of the electroosmotic pump 10A are connected to each other, the upstream end of the liquid suction member 52 is immersed within the electrolytic solution 60 in the tank or cartridge.

The electrolytic solution 60 permeates the liquid suction member 52, travels downstream in the liquid suction member 52, and also enters into the air-bleeding path 56. When the electrolytic solution 60 in the liquid suction member 52 reaches the surface of the electrode 18 earlier than the electrolytic solution 60 traveling through the air-bleeding path 56, the electrolytic solution 60 in the liquid suction member 52 permeates the electroosmotic member 16 through the pores 30 in the electrode 18. At the same time, the electrolytic solution 60 develops a pressure buildup in the inlet chamber 26. Inasmuch as the impregnation pressure in the liquid suction member 52 is higher than the impregnation pressure in the air-bleeding path 56, air near the electrode 28 enters the air-bleeding path 56 and is discharged while pushing the electrolytic solution 60 in the air-bleeding path 56, or is discharged through the air-bleeding path 56.

The electrolytic solution 60 that has permeated the electroosmotic member 16 quickly seeps from the inlet electrode 18 toward the outlet electrode 20, thereby filling the electroosmotic member 16.

When the DC power supply 34 applies a DC voltage to the electrodes 18, 20, the electrolytic solution 60 in the electroosmotic member 16 moves toward the outlet electrode 20, based on the electric field generated between the electrodes 18, 20, and is discharged through the pores 32 of the electrode 20 into the outlet chamber 28.

The electrolytic solution 60 that has been discharged into the outlet chamber 28 is supplied through the bubble isolator 40 to a fluid device such as a microfluid chip, not shown, connected to the downstream side of the fluid passage 14.

Oxygen gas bubbles produced near the electrode 18 by an electrochemical reaction when the DC voltage is applied are discharged through the gas vent 44, and hydrogen gas bubbles produced near the electrode 20 are discharged through the gas vent 42.

In FIG. 1, the upstream end of the liquid suction member 52 projects from the pump casing 12. However, the liquid suction member 52 can be supplied with electrolytic solution 60 from the tank or cartridge regardless of whether the upstream ends of the liquid suction member 52 and the pump casing 12 are aligned in position with each other, or whether the upstream end of the liquid suction member 52 is located within the pump casing 12.

With the electroosmotic pump 10A according to the first embodiment, therefore, even when hydrogen gas is produced near the outlet electrode 20 by application of the DC voltage, the bubble isolator 40 disposed downstream from the electroosmotic member 16 allows the drive liquid and the electrolytic solution 60 to pass therethrough, while preventing hydrogen gas from passing. Accordingly, hydrogen gas is prevented from being introduced into the fluid device such as a microfluid chip, not shown, connected to the downstream side of the fluid passage 14. Further, the electroosmotic pump 10A can accurately control the position of the liquid that passes through the fluid device.

Since hydrogen gas produced in the vicinity of the outlet electrode 20 is discharged through the gas vent 42, when the electroosmotic pump 10A is operated over a long period of time, the pump performance is prevented from being lowered by bubbles that would otherwise stick to the outlet electrode 20 and to the electroosmotic member 16. Even if a portion of the oxygen gas produced in the vicinity of the inlet electrode 18 passes through the electroosmotic member 16, it can be discharged through the gas vent 42.

The gas vent 44 is effective at preventing oxygen gas from sticking upstream from the electroosmotic member 16 and the inlet electrode 18, so that performance of the electroosmotic pump 10A is prevented from being lowered.

Since the liquid suction member 52 of the self-priming mechanism 50 and the electroosmotic member 16 are held in contact with each other, when the liquid suction member 52 is filled with electrolytic solution 60 from the outside, the filled electrolytic solution 60 quickly permeates the electroosmotic member 16 through the liquid suction member 52. When the DC voltage is then applied to the electrodes 18, 20, the drive liquid and the electrolytic solution 60 can reliably be discharged from the electroosmotic member 16 toward the downstream side of the fluid passage 14. As a result, a self-priming capability of the electroosmotic pump 10A is maintained, even if air is present in the vicinity of the inlet electrode 18.

In the above description, it is desirable for the liquid suction member 52 to be held in contact with the electroosmotic member 16, from the standpoint of self-priming the drive liquid (the electrolytic solution 60). If the wettability between the inlet electrode 18 and the electrolytic solution is good, then the electroosmotic member 16 and the liquid suction member 52 can be held in contact with the inlet electrode 18 interposed therebetween, i.e., the liquid suction member 52 and the inlet electrode 18 can be held in contact with each other. Furthermore, both the electroosmotic member 16 and the inlet electrode 18 can be held in contact with the liquid suction member 52.

Assuming that the bubble isolator 40 is made of a hydrophilic material, the gas pressure required for gas to pass through the bubble isolator 40 (the minimum bubble point) is 1 [kPa] or higher, and the thickness of the bubble isolator 40 along the axial direction of the fluid passage 14 is 3 [mm] or less, then hydrogen gas produced in the vicinity of the electrode 20 is prevented from flowing downstream along the fluid passage 14, according to the actual pump characteristics (dimensions and pressure characteristics) which the present embodiment is concerned with.

If the gas vent 42 is made of a hydrophobic material, the pressure under which the drive liquid passes through the gas vent 42 is set at a level lower than the maximum pressure of the drive liquid when the pump is in operation, and the thickness of the gas vent 42 along the direction in which the gas passes in the fluid passage 14 is 3 [mm] or less, then hydrogen gas produced in the vicinity of the electrode 20 can be discharged efficiently.

In the electroosmotic pump 10A according to the first embodiment, an electrolytic solution 60 has been described primarily as the drive liquid. However, other liquids may be used as the drive liquid. In this case, when a DC voltage is applied to the electrodes 18, 20, gas bubbles of a component peculiar to the other liquid are produced in the vicinity of the electrodes 18, 20.

In the electroosmotic pump 10A, the electrodes 18, 20 are shaped as electrodes having pores 30, 32 defined therein. However, wire-shaped electrodes, or electrodes in the form of a porous body whose surface is evaporated with a metal, may also be employed. The electrodes 18, 20 should preferably be made of an electrically conductive material, such as platinum, carbon, silver or the like.

The inlet electrode 18 serves as a positive electrode and the outlet electrode 20 serves as a negative electrode, on the assumption that the electroosmotic member 16 is negatively charged. However, if the electroosmotic member 16 is positively charged, then the inlet electrode 18 may serve as a negative electrode while the outlet electrode 20 serves as a positive electrode, wherein the above operations and advantages can also be achieved.

Although the DC voltage is applied to the electrodes 18, 20, a pulsed voltage may also be applied to the electrodes 18, 20.

In the electroosmotic pump 10A, the pump casing 12 includes the large-diameter portion 22 and the small-diameter portion 24, which are arranged in succession from the upstream side. However, the pump casing 12 is not limited to the above configuration. The pump casing 12 may have a straight shape as a whole, or may include a small-diameter portion and a large-diameter portion, which are arranged in succession from the upstream side.

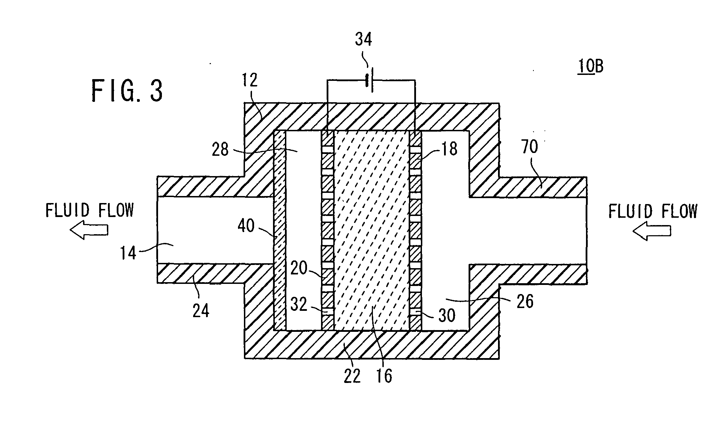

An electroosmotic pump 10B according to a second embodiment shall be described below with reference to FIGS. 3 through 5. Components of the electroosmotic pump 10B that are identical to those of the electroosmotic pump 10A according to the first embodiment shall be denoted by identical reference characters. This also holds true for other embodiments.

As shown in FIG. 3, the electroosmotic pump 10B according to the second embodiment includes a bubble isolator 40 disposed in the outlet chamber 28, and differs from the electroosmotic pump 10A according to the first embodiment (see FIGS. 1 and 2) in that the gas vents 42, 44 and the self-priming mechanism 50 are not provided therein.

The electroosmotic pump 10B is used in applications where the inlet chamber 26 incorporates a countermeasure therein for the generation of gas and has a large upstream inlet diameter (e.g., 5 mm or greater), and wherein no significant hydrogen gas is produced in the output chamber 28 when the electroosmotic pump 10B is operated for a short period of time.

The bubble isolator 40 disposed in the outlet chamber 28 is effective to prevent bubbles from flowing into various fluid devices connected to the downstream side of the fluid passage 14. Although bubbles accumulate in the outlet chamber 28, this gas will not largely affect pump operations, insofar as the operating time of the electroosmotic pump 10B is relatively short and the amount of produced gas is small. The bubble isolator 40 is also effective at preventing foreign matter other than bubbles from flowing into the various fluid devices. Since the electroosmotic pump 10B is constructed of fewer components, and is capable of preventing bubbles and foreign matter from flowing downstream, the electroosmotic pump 10B can be manufactured less costly.

The electroosmotic pump 10B can be operated reliably by ensuring that the volume of the outlet chamber 28 is large compared with the expected amount of the produced gas. The electroosmotic pump 10B may employ a drive liquid, which is supplied to the fluid passage 14, wherein the liquid has a low electric conductivity, thereby producing no significant gas in the vicinity of the electrodes 18, 20 when a DC voltage is applied to the electrodes 18, 20. The drive liquid may be an alcohol or an organic solvent.

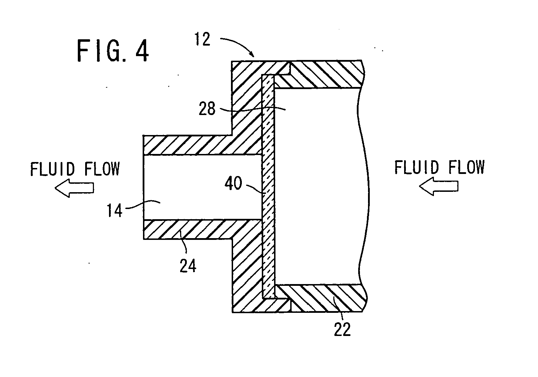

As shown in FIG. 4, the electroosmotic pump 10B includes a large-diameter portion 22 and a small-diameter portion 24, which are separated from each other and combined in an interfitting relation to each other, with the bubble isolator 40 being sandwiched between the large-diameter portion 22 and the small-diameter portion 24. If a hydrophobic packing, a seat, or an O-ring, not shown, is inserted between the interfitting region of the large-diameter portion 22 and the small-diameter portion 24, then the electrolytic solution can be prevented from leaking out through the interfitting region.

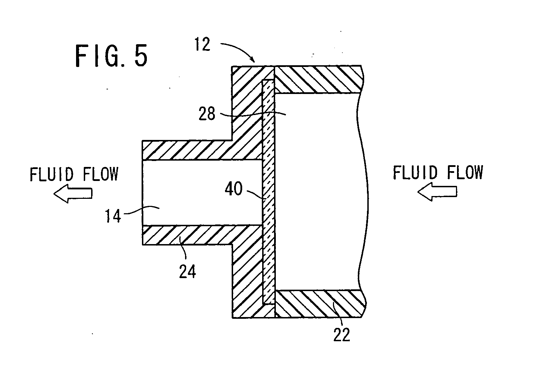

As shown in FIG. 5, the electroosmotic pump 10B may include a large-diameter portion 22 and a small-diameter portion 24, which are separated from each other and fused or bonded to each other, with the bubble isolator 40 being fixed to the small-diameter portion 24.

In the electroosmotic pump 10B, the pump casing 12 includes a small-diameter portion 70, a large-diameter portion 22, and a small-diameter portion 24, which are arranged successively from the upstream side. However, the pump casing 12 is not limited to the above configuration.

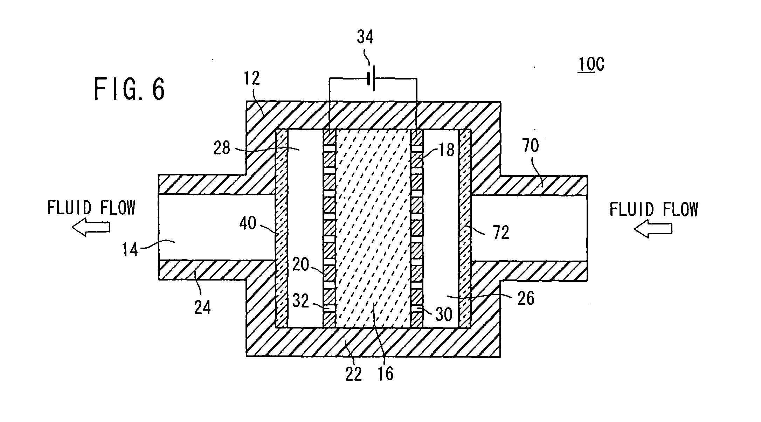

An electroosmotic pump 10C according to a third embodiment shall be described below with reference to FIG. 6.

The electroosmotic pump 10C according to the third embodiment differs from the electroosmotic pump 10B according to the second embodiment (see FIG. 3) in that the large-diameter portion 22 of the inlet chamber 26 and the small-diameter portion 70 thereof are divided and separated from each other by a bubble isolator (upstream liquid passing member) 72.

The bubble isolator 72 is substantially identical in structure to the bubble isolator 40, and is used in applications where no significant gas is produced in the vicinity of the inlet electrode 18, and no significant gas is produced in the vicinity of the outlet electrode 20, and further wherein the electroosmotic pump 10C is operated for only a short period of time.

The electroosmotic pump 10C operates in the same manner and offers the same advantages as the electroosmotic pump 10B according to the second embodiment (see FIG. 3). In addition, even if foreign matter and bubbles flow into the electroosmotic pump 10C from an upstream side of the fluid passage 14, the bubble isolator 72 prevents such foreign matter and bubbles from flowing into the inlet chamber 26. As a result, performance of the electroosmotic pump 10C is maintained.

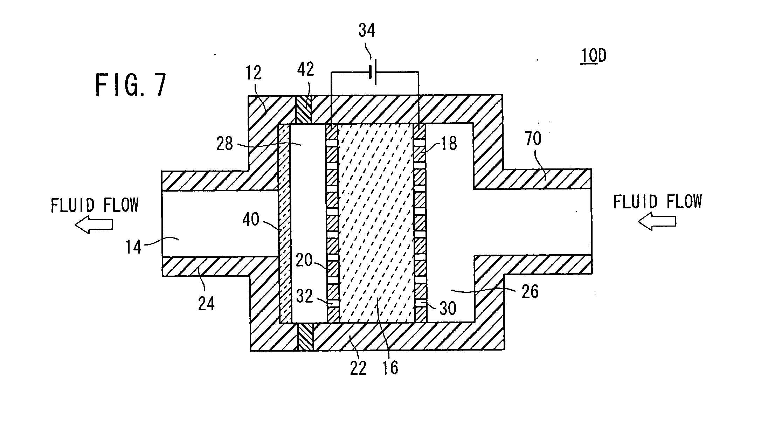

An electroosmotic pump 10D according to a fourth embodiment shall be described below with reference to FIGS. 7 through 14.

The electroosmotic pump 10D according to the fourth embodiment differs from the electroosmotic pump 10B according to the second embodiment (see FIG. 3) in that the gas vent 42 is disposed in a side wall of the pump casing 12, in the vicinity of the outlet electrode 20.

The electroosmotic pump 10D is used in applications where generation of gas in the inlet chamber 26 causes no significant problems, and even if gas is produced, the gas bubbles can be discharged from the inlet chamber 26 by gravity. A reservoir for supplying the drive liquid to the fluid passage 14 can be connected to an upstream side of the electroosmotic pump 10D.

With the electroosmotic pump 10D, even if a large amount of gas is produced in the vicinity of the electrode 20, the gas can be discharged through the gas vent 42. Therefore, bubbles are prevented from being discharged downstream along the fluid passage 14, and the electroosmotic pump 10D can be continuously operated over a long period of time.

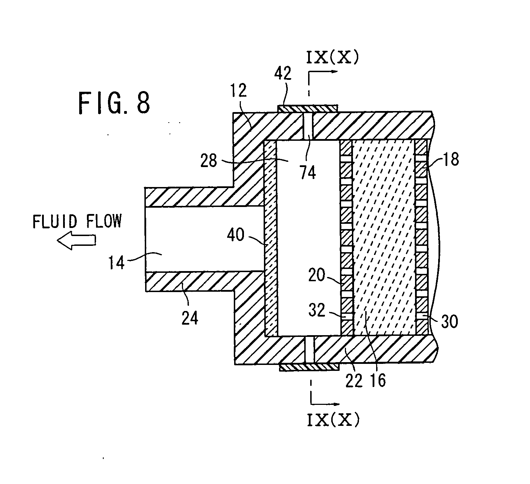

As shown in FIG. 8, the electroosmotic pump 10D may include a plurality of holes 74 defined in the side wall of the pump casing 12 around the outlet chamber 28, which are in fluid communication with the exterior. Further, a gas vent 42 may be disposed on the pump casing 12 in closing relation to the holes 74.

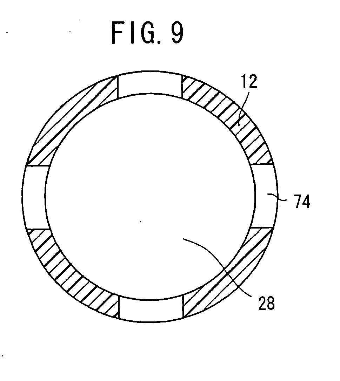

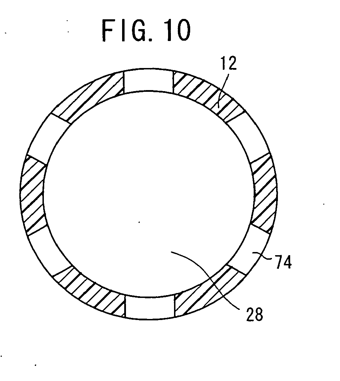

As shown in FIGS. 9 and 10, the holes 74 are defined at equal intervals along the circumferential direction of the pump casing 12 so as to discharge the gas in the outlet chamber 28 through the holes 74 and the gas vent 42, regardless of the attitude the electroosmotic pump 10D may be placed in. FIG. 9 shows four holes 74 defined in a side wall of the pump casing 12 at 90[°] intervals, whereas FIG. 10 shows six holes 74 defined in the side wall of the pump casing 12 at 60[°] intervals.

The gas vent 42 may comprise a plurality of gas vents 42 closing the respective holes 74, or the gas vent 42 may be wound around the side wall of the pump casing 12 in order to close the holes 74.

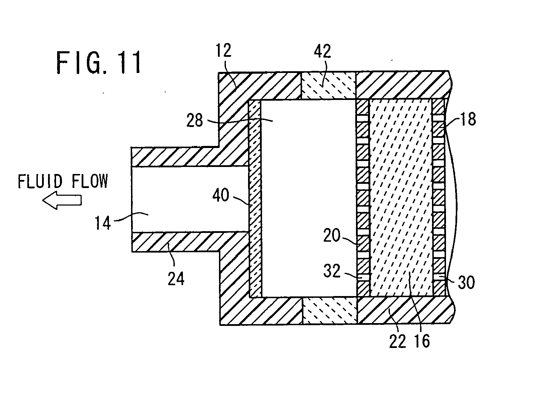

In FIGS. 7 and 8, the gas vent 42 is made of a hydrophobic gas-permeable plastic material (e.g., a gas-permeable heat-shrinkable tube of PTFE). As shown in FIG. 11, the gas vent 42 may also comprise a block of porous ceramics having greater mechanical strength. The block of porous ceramics is fused or bonded into the side wall of the pump casing 12 after it has been made hydrophobic, thereby providing a sufficiently high minimum water breakthrough point for the drive liquid.

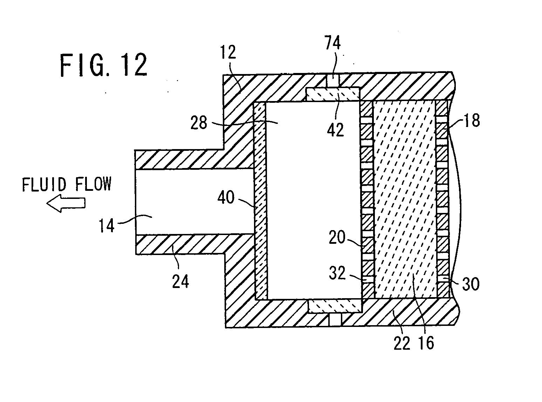

If the gas vent 42 is not required to be rigid, then the block of porous ceramics shown in FIG. 11 may be replaced with a porous sheet or a membrane as shown in FIG. 12. If the sheet or membrane is disposed in the pump casing 12, then the bonding strength of the sheet or membrane with respect to the pump casing 12 is maintained.

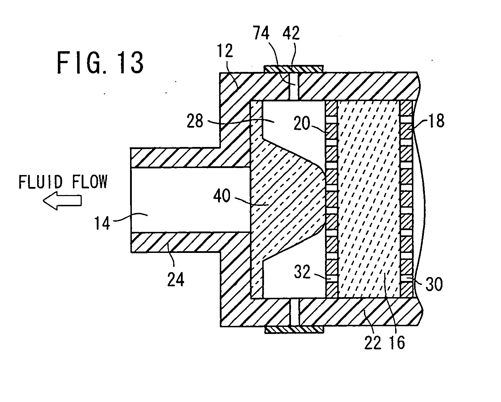

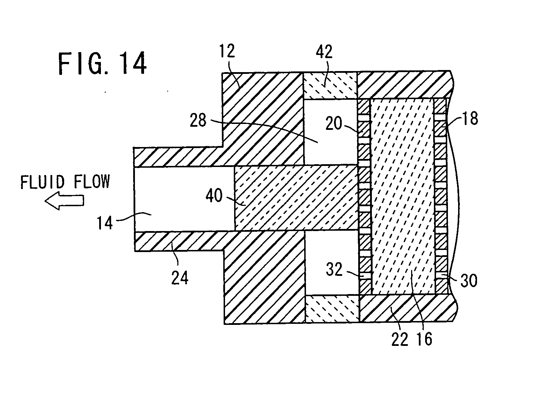

As shown in FIGS. 13 and 14, if the bubble isolator 40 is held in contact with the outlet electrode 20, then a space defined by the bubble isolator 40, the large-diameter portion 22, and the electrode 20 serves as a gas vent fluid passage, for discharging gas generated in the vicinity of the electrode 20 through the gas vent 42. Therefore, gas can quickly be discharged through the gas vent 42. Since the outlet electrode 20 and the bubble isolator 40 are held in contact with each other, the drive liquid, which is discharged from the electroosmotic member 16 through the pores 32, can directly permeate into the bubble isolator 40 and supplied therethrough to various fluid devices connected to the downstream side of the fluid passage 14.

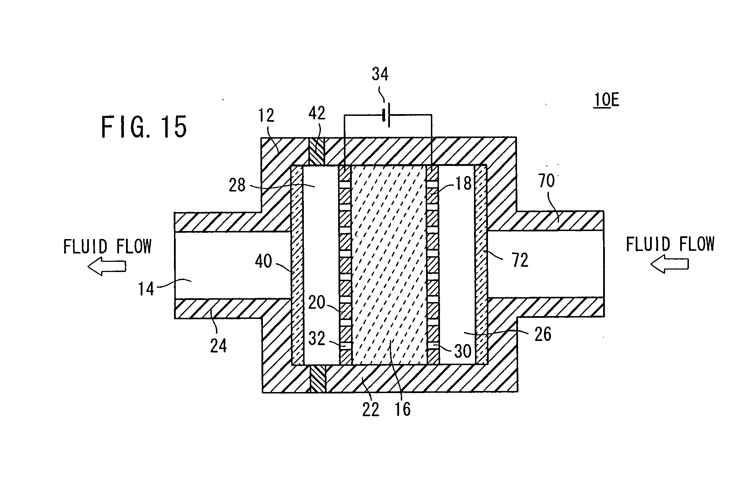

An electroosmotic pump 10E according to a fifth embodiment shall be described below with reference to FIG. 15.

The electroosmotic pump 10E according to the fifth embodiment differs from the electroosmotic pump 10D according to the fourth embodiment (see FIG. 7) in that the bubble isolator 72 is disposed in the inlet chamber 26.

The electroosmotic pump 10E operates in the same manner and offers the same advantages as the electroosmotic pumps 10C, 10D according to the third and fourth embodiments (see FIGS. 6 and 7). The electroosmotic pump 10E may be used in applications where generation of gas within the inlet chamber 26 causes no problems, wherein foreign matter and bubbles are prevented by the bubble isolator 72 from flowing inward from the upstream side of the fluid passage 14.

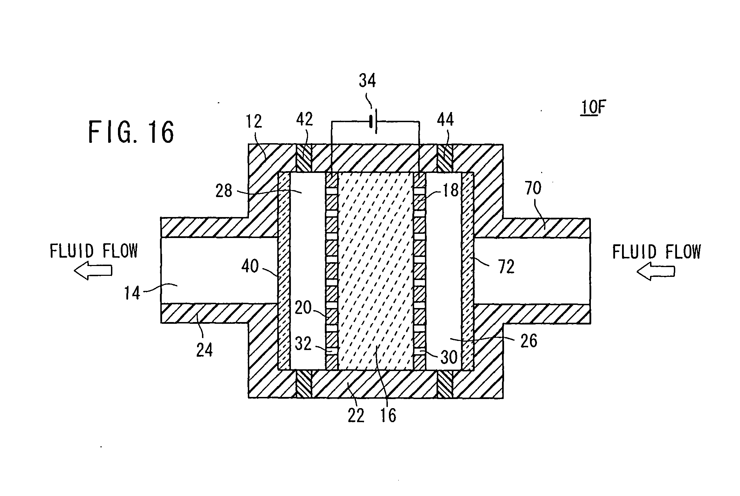

An electroosmotic pump 10F according to a sixth embodiment shall be described below with reference to FIG. 16.

The electroosmotic pump 10F according to the sixth embodiment differs from the electroosmotic pump 10E according to the fifth embodiment (see FIG. 15) in that the gas vent 44 is disposed in the side wall of the pump casing 12 in the vicinity of the inlet chamber 26.

The electroosmotic pump 10F operates in the same manner and offers the same advantages as the electroosmotic pumps 10A, 10E according to the first and fifth embodiments (see FIGS. 1 and 15). The electroosmotic pump 10F is used in applications where generation of gas from the inlet electrode 18, as well as generation of gas from the outlet electrode 20, are significant. If the pressure in the inlet chamber 26 is higher than the external pressure around the electroosmotic pump 10E (i.e., the internal pressure of the electroosmotic pump 10 > the external pressure), then gas can be discharged through the gas vent 44 as a result of the pressure difference.

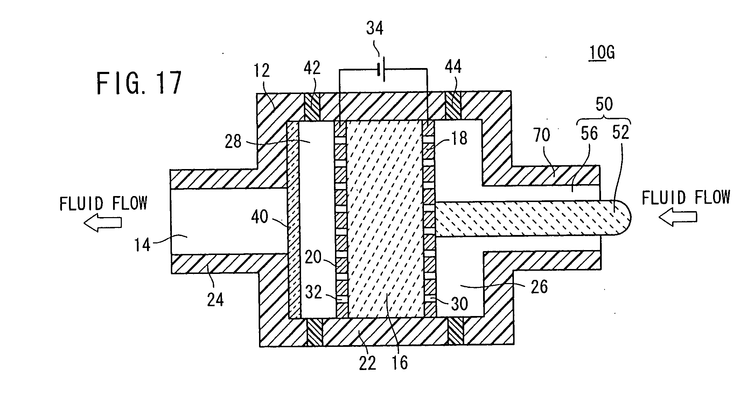

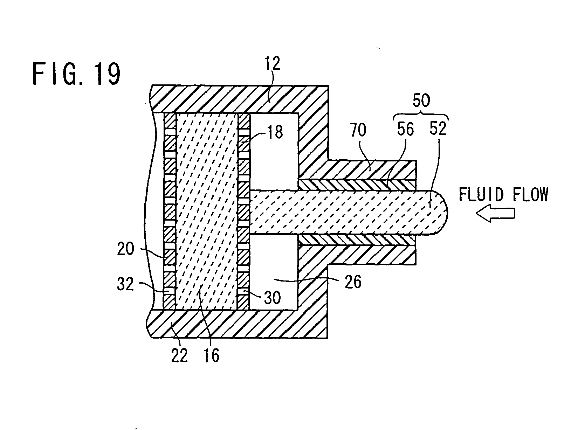

An electroosmotic pump 10G according to a seventh embodiment shall be described below with reference to FIGS. 17 through 21.

The electroosmotic pump 10G according to the seventh embodiment differs from the electroosmotic pump 10F according to the sixth embodiment (see FIG. 16) in that the self-priming mechanism 50 is disposed in the inlet chamber 26 instead of the bubble isolator 72. In the electroosmotic pump 10, the self-priming mechanism 50 comprises a liquid suction member 52 and an air-bleeding path 56.

The electroosmotic pump 10G operates in the same manner and offers the same advantages as the electroosmotic pumps 10A, 10F according to the first and sixth embodiments (see FIGS. 1 and 16). The electroosmotic pump 10G is used in applications where generation of gas in the vicinity of the inlet electrode 18 as well as generation of gas in the vicinity of the outlet electrode 20 are significant, and hence a self-priming function is required for priming the electroosmotic member 16.

The liquid suction member 52 having a higher impregnation pressure and the air-bleeding path 56 having a lower impregnation pressure are combined with each other so as to control the pressure in the inlet chamber 26 under these impregnation pressures. Accordingly, pressurization of the inlet chamber 26 from outside of the electroosmotic pump 10G is not required, and air within the inlet chamber 26 as well as gas produced in the vicinity of the electrode 18 can be discharged efficiently.

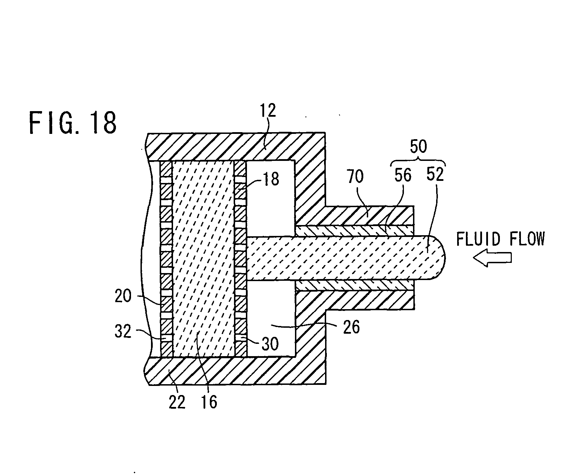

In FIG. 17, the air-bleeding path 56 comprises a simple air gap. However, as shown in FIG. 18, the air-bleeding path 56 may be made of a porous material (e.g., glass fibers) having a lower impregnation pressure than the liquid suction member 52. Since the impregnation force for the drive liquid in the liquid suction member 52 is greater than the impregnation force in the air-bleeding path 56, when the liquid suction member 52 is supplied with the drive liquid, the liquid quickly permeates the liquid suction member 52, and then quickly permeates the electroosmotic member 16 through the pores 30 of the electrode 18. The porous material may be either hydrophobic or hydrophilic.

The air-bleeding path 56 may be made of a hydrophobic gas-permeable material (e.g., a plastic fiber material), rather than a material having a lower impregnation pressure as shown in FIG. 18. In this case, when the liquid suction member 52 is filled with the drive liquid, pressure in the inlet chamber 26 increases, thereby discharging the air in the inlet chamber 26 through the air-bleeding path 56.

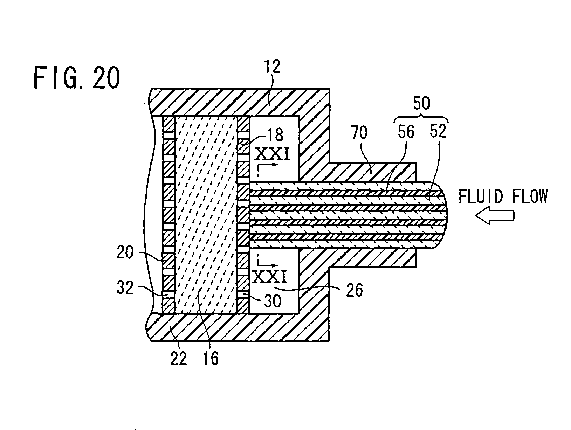

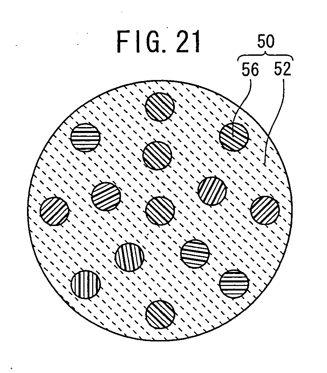

As shown in FIGS. 20 and 21, the liquid suction member 52 may be disposed in contact with the inner wall of the small-diameter portion 70, and may have a plurality of air-bleeding paths 56 disposed therein along the axial direction of the fluid passage 14. The air-bleeding paths 56 are made of a hydrophobic gas-permeable material. If the liquid suction member 52 has dried inner portions therein when the electroosmotic pump 10G is reactivated, air within the dried inner portions can be discharged through the air-bleeding paths 56.

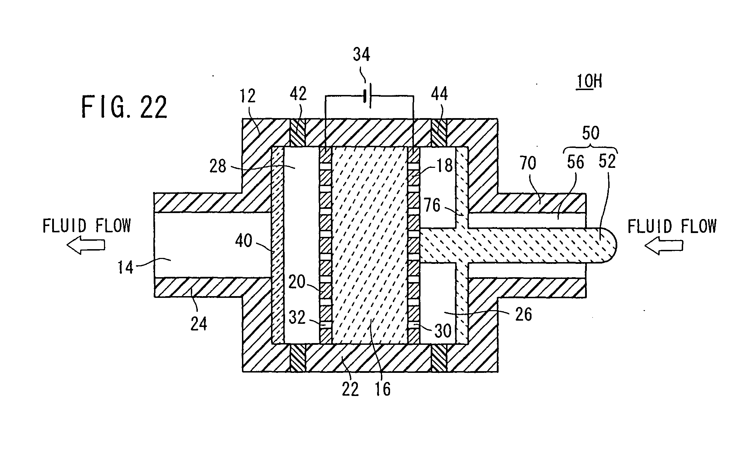

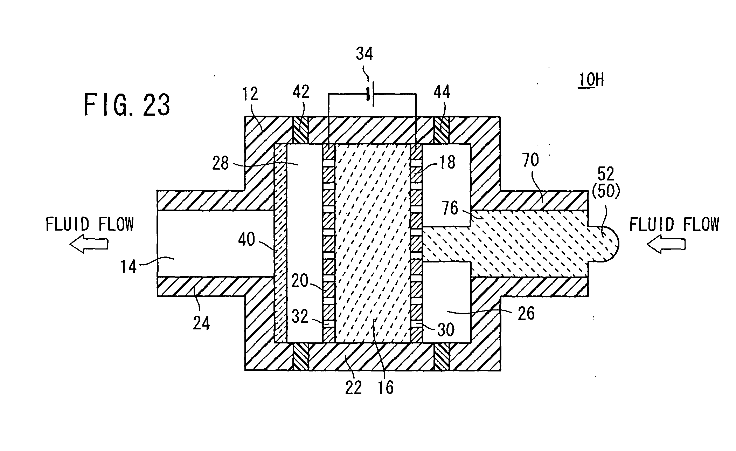

An electroosmotic pump 10H according to an eighth embodiment shall be described below with reference to FIGS. 22 and 23.

The electroosmotic pump 10H according to the eighth embodiment differs from the electroosmotic pump 10G according to the seventh embodiment (see FIG. 17) in that the liquid suction member 52 includes a protrusion 76, which divides and separates the upstream side of the fluid passage 14 and the inlet chamber 26 from each other.

In FIG. 22, the protrusion 76 projects radially outward from a side wall of the liquid suction member 52, thereby dividing and separating the large-diameter portion 22 and the small-diameter portion 70 from each other in the vicinity of the inlet chamber 26. In FIG. 23, the protrusion 76 projects and abuts against the inner wall of the small-diameter portion 70.

The liquid suction member 52 and the protrusion 76 are made of a hydrophilic material to generate a higher impregnation pressure with the drive liquid, while also functioning as a bubble isolator 72 (FIGS. 6 and 15). Stated otherwise, the liquid suction member 52 and the protrusion 76 function as an upstream liquid self-priming mechanism, as well as an upstream liquid passing member. Therefore, the liquid suction member 52 and the protrusion 76 are capable of preventing foreign matter and bubbles from flowing into the electroosmotic pump 10H, while also preventing air, from flowing upstream from the inlet chamber 26 as a result of depressurization upstream from the self-priming mechanism 50.

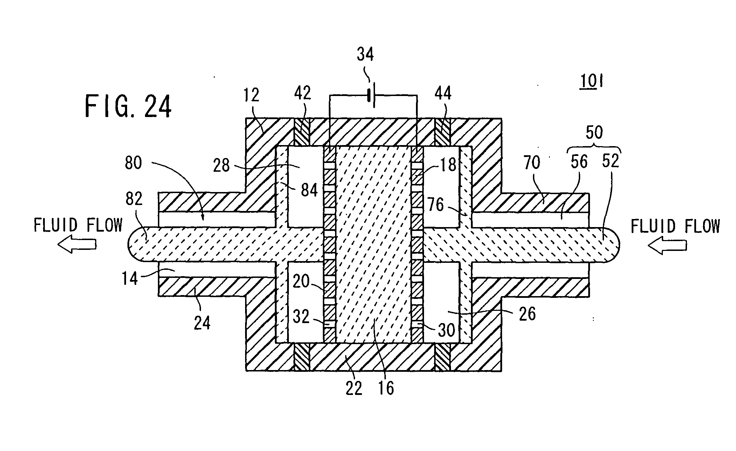

An electroosmotic pump 10I according to a ninth embodiment shall be described below with reference to FIG. 24.

The electroosmotic pump 10I according to the ninth embodiment differs from the electroosmotic pump 10H according to the eighth embodiment (see FIGS. 22 and 23) in that a self-priming mechanism (downstream liquid self-priming mechanism) 80, which is identical to the self-priming mechanism 50, is disposed in a downstream region of the fluid passage 14.

The self-priming mechanism 80 includes a liquid suction member 82 held in contact with the outlet electrode 20. The liquid suction member 82 includes a protrusion 84 projecting from a side wall thereof and defining an outlet chamber 28. As with the liquid suction member 52, the liquid suction member 82 is made of a hydrophilic material to generate a high impregnation pressure with the drive liquid. The protrusion 84 also functions as a bubble isolator 40 (see FIGS. 1, 3, 6, 7, 15 through 17, 22, and 23). Stated otherwise, the liquid suction member 82 and the protrusion 84 function as a downstream liquid self-priming mechanism as well as a downstream liquid passing member. Therefore, the liquid suction member 82 and the protrusion 84 are capable of preventing foreign matter and bubbles from flowing downstream along the fluid passage 14. Gas in the inlet chamber 26 is discharged through the gas vent 44, and gas in the outlet chamber 26 is discharged through the gas vent 42. Since the self-priming mechanisms 50, 80 are disposed respectively in upstream and downstream regions, the drive liquid can efficiently be discharged from the upstream region toward the downstream region, and can efficiently be drawn from the downstream region toward the upstream region. It is preferable for the liquid suction member 82 to be held in contact with the electroosmotic member 16, from the standpoint of self-priming the drive liquid. If the wettability of the outlet electrode 20 with the electrolytic solution is good, then the electroosmotic member 16 and the liquid suction member 82 can be held in contact with each other through the outlet electrode 20, i.e., the liquid suction member 82 and the outlet electrode 20 can be held in contact with each other. Furthermore, the electroosmotic member 16 and the outlet electrode 20 can also be held in contact with the liquid suction member 52.

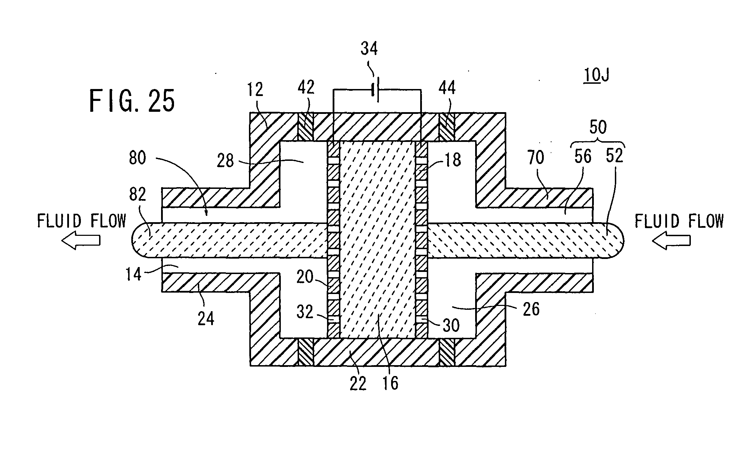

An electroosmotic pump 10J according to a tenth embodiment shall be described below with reference to FIG. 25.

The electroosmotic pump 10J according to the tenth embodiment differs from the electroosmotic pump 10I according to the ninth embodiment (see FIG. 24) in that the liquid suction members 52, 82 do not have the protrusions 76, 84.

In the electroosmotic pump 10J, the drive liquid can efficiently be discharged from the upstream region toward the downstream region, and can efficiently be drawn from the downstream region toward the upstream region.

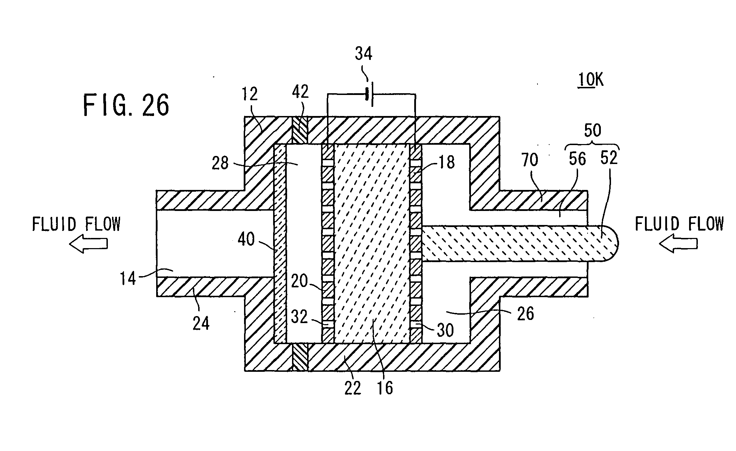

An electroosmotic pump 10K according to an eleventh embodiment shall be described below with reference to FIG. 26.

The electroosmotic pump 10K according to the eleventh embodiment differs from the electroosmotic pump 10D according to the fourth embodiment (see FIG. 7) in that a liquid suction member 52 is disposed in the inlet chamber 26.

The electroosmotic pump 10K operates in the same manner, and offers the same advantages, as the electroosmotic pumps 10D, 10G according to the fourth and seventh embodiments (see FIGS. 7 and 17), and is capable of discharging gas generated in the vicinity of the inlet electrode 18 through the air-bleeding path 56. Therefore, the structure of the pump inlet region is simplified. Specifically, when conventional pumps are reduced in size, then the reservoir for the drive liquid also is reduced in size, making it difficult to fill the electroosmotic member with the drive liquid from outside of the pump. According to the present embodiment, the liquid suction member 52, which is effectively permeable to the drive liquid, is provided, thereby allowing the electroosmotic member to be filled easily with the drive liquid, so that the reservoir can be reduced in size.

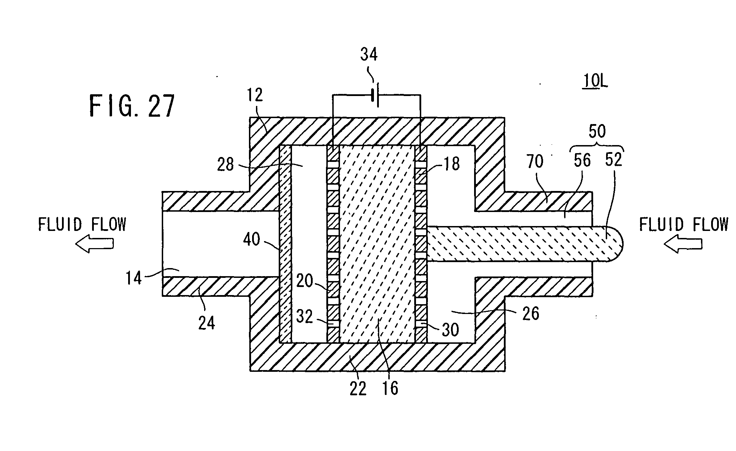

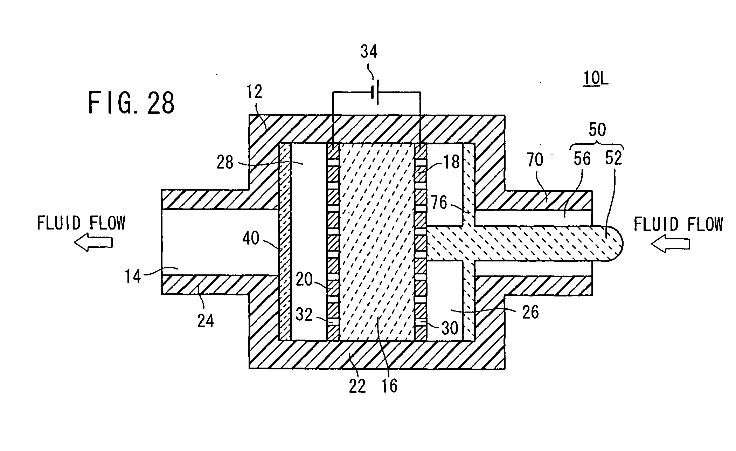

An electroosmotic pump 10L according to a twelfth embodiment shall be described below with reference to FIGS. 27 and 28.

The electroosmotic pump 10L according to the twelfth embodiment differs from the electroosmotic pump 10K according to the eleventh embodiment (see FIG. 26) in that it does not have the gas vent 42.

The electroosmotic pump 10L operates in the same manner, and offers the same advantages, as the electroosmotic pump 10K according to the eleventh embodiment (see FIG. 26), and may be used in applications where no gas bleeding is required.

If the liquid suction member 52 has the protrusion 76, then the liquid suction member 52 can reliably prevent foreign matter and bubbles from flowing into the inlet chamber 26, similar to the electroosmotic pump 10H according to the eighth embodiment (see FIG. 22).

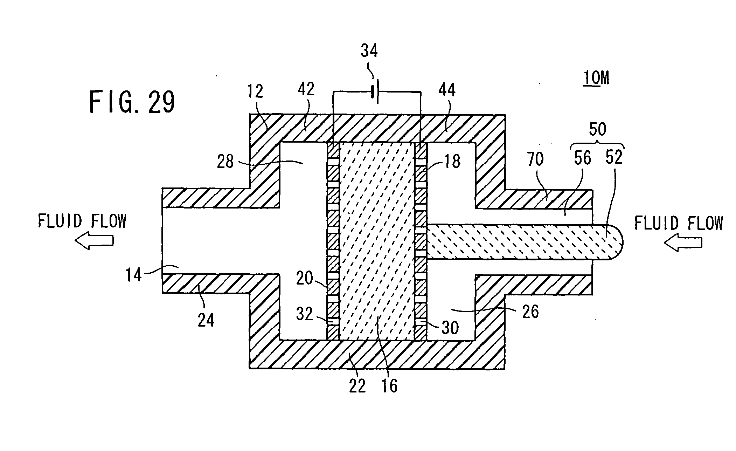

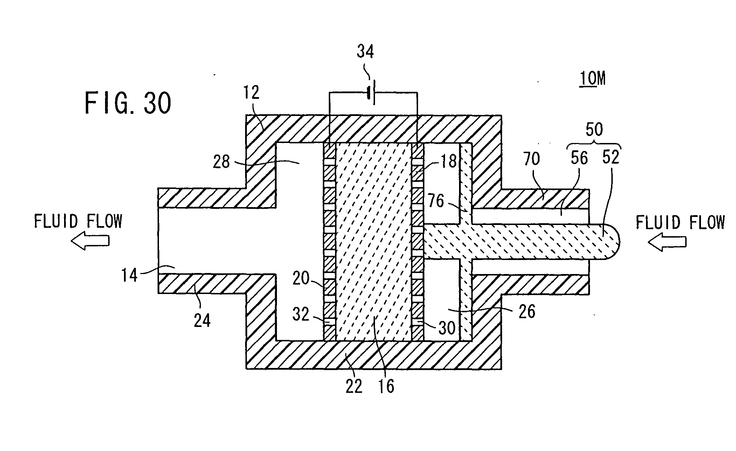

An electroosmotic pump 10M according to a thirteenth embodiment shall be described below with reference to FIGS. 29 and 30.

The electroosmotic pump 10M according to the thirteenth embodiment differs from the electroosmotic pump 10L according to the twelfth embodiment (see FIGS. 27 and 28) in that it does not include the bubble isolator 40.

The electroosmotic pump 10M according to the thirteenth embodiment (see FIG. 29) is used in applications where gas vent is not required, similar to the electroosmotic pump 10L according to the twelfth embodiment (see FIGS. 27 and 28). Further, if the liquid suction member 52 has the protrusion 76 (see FIG. 30), then the liquid suction member 52 can reliably prevent foreign matter and bubbles from flowing into the inlet chamber 26, similar to the electroosmotic pump 10H according to the eighth embodiment (see FIG. 22).

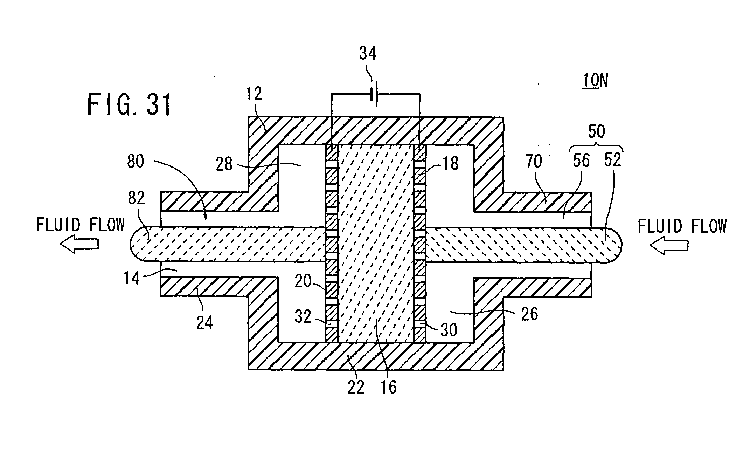

An electroosmotic pump 10N according to a fourteenth embodiment shall be described below with reference to FIGS. 31 through 34.

The electroosmotic pump 10N according to the fourteenth embodiment differs from the electroosmotic pump 10M according to the thirteenth embodiment (see FIGS. 29 and 30) in that a self-priming mechanism 80 also is disposed in the outlet chamber 28.

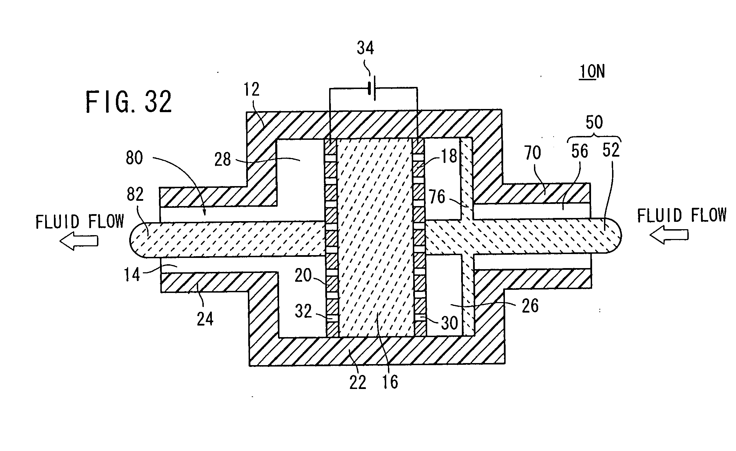

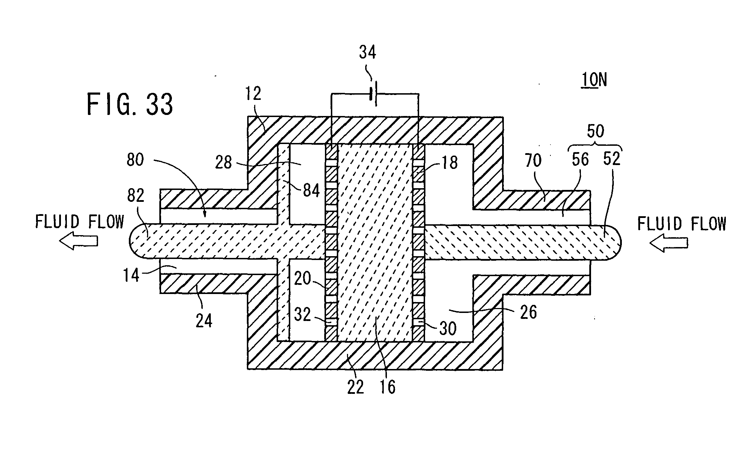

The electroosmotic pump 10N shown in FIG. 31 is used in applications where gas bleeding is not required, similar to the electroosmotic pumps 10L and 10M according to the twelfth and thirteenth embodiments (see FIGS. 27 through 30). Further, if the liquid suction member 52 has the protrusion 76 (see FIG. 32), then the liquid suction member 52 can reliably prevent foreign matter and bubbles from flowing into the inlet chamber 26, similar to the electroosmotic pump 10H according to the eighth embodiment (see FIG. 22). Moreover, if the liquid suction member 82 has the protrusion 84 (see FIG. 33), then the liquid suction member 82 can reliably prevent foreign matter and bubbles from flowing downstream along the fluid passage 14, similar to the electroosmotic pump 10H according to the ninth embodiment (see FIG. 24).

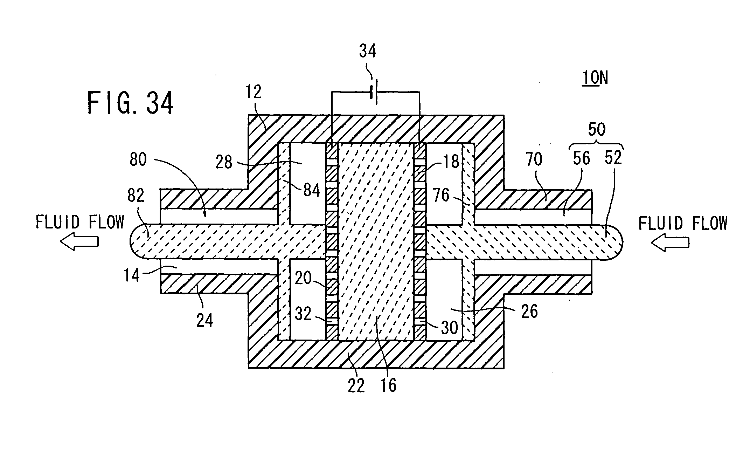

Even further, if the liquid suction members 52, 82 include the protrusions 76, 84 (see FIG. 34), then the liquid suction members 52, 82 can reliably prevent foreign matter and bubbles from flowing into the inlet chamber 26, while also reliably preventing bubbles from flowing outward downstream along the fluid passage 14.

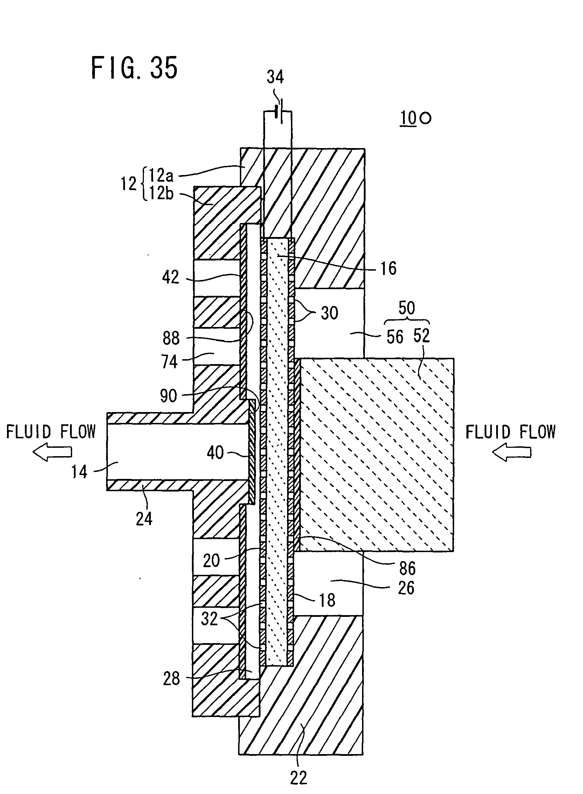

An electroosmotic pump 100 according to a fifteenth embodiment shall be described below with reference to FIG. 35.

The electroosmotic pump 100 according to the fifteenth embodiment has further structural details more specific than those of the electroosmotic pump 10K according to the eleventh embodiment (see FIG. 26).

The pump casing 12 comprises a first portion 12a including the large-diameter portion 22 and a second portion 12b including the small-diameter portion 24. The self-priming mechanism 50, the inlet electrode 18, the electroosmotic member 16, and the outlet electrode 20 are successively arranged in this order in the first portion 12a, from the upstream side toward the second portion 12b thereof. The bubble isolator 40 and the gas vent 42 are disposed in the second portion 12b, in confronting relation to the electroosmotic member 16 and the outlet electrode 20. When the first portion 12a and the second portion 12b are fitted together, a closed space forming the outlet chamber 28 is defined by the electroosmotic member 16 and the outlet electrode 20, the bubble isolator 40 and the gas vent 42, and the first portion 12a and the second portion 12b.

A drive liquid absorbing member 86 is disposed between the liquid suction member 52 of the self-priming mechanism 50 and the inlet electrode 18 or the electroosmotic member 16. If the liquid suction member 52 is made of a rigid material, such as a porous ceramic (e.g., alumina), then the drive liquid absorbing member 86 is provided in order to quickly supply the drive liquid, which has been introduced into the liquid suction member 52 by way of self-priming, to the electroosmotic member 16.

Specifically, the drive liquid absorbing member 86 is made of a pliable, water-absorbing, hydrophilic and water-retentive material, such as a hydrophilic spongy porous body (with pore diameters ranging from 10 [$\mu$m] to 100 [$\mu$m]), a sheet of paper pulp, or a sheet of synthetic fibers, wherein the material closely contacts with the surface of the electroosmotic member 16 and to the surface of the liquid suction member 52. For example, the drive liquid absorbing member 86 comprises a hydrophilic sheet having a thickness of 1 [mm], which is sandwiched and pressed between the liquid suction member 52 (a porous ceramic with a pore diameter of about several tens [$\mu$m]) and the electroosmotic member 16 (a porous ceramic with a pore diameter ranging from several tens [nm] to several [$\mu$m]), for increasing contact thereof to the surface of the liquid suction member 52 and to the surface of the electroosmotic member 16, such that the liquid suction member 52 and the electroosmotic member 16 are reliably joined to each other through the drive liquid absorbing member 86.

Therefore, the drive liquid, which has been introduced by the liquid suction member 52 by way of self-priming, can quickly be supplied to the electroosmotic member 16, thereby improving pump performance.

Furthermore, since the drive liquid absorbing member 86 also functions as a cushion between the liquid suction member 52 and the electroosmotic member 16 or the inlet electrode 18, these components can be assembled efficiently.

If the wettability of the inlet electrode 18 with respect to the drive liquid is good, then the drive liquid absorbing member 86 can be made of a material which closely contacts with the inlet electrode 18, whereby the electroosmotic member 16 and the drive liquid absorbing member 86 are held in contact with the inlet electrode 18 interposed therebetween, i.e., the drive liquid absorbing member 86 and the inlet electrode 18 are held in contact such that the drive liquid absorbing member 86 is sandwiched between the inlet electrode 18 and the liquid suction member 52. In this case, the electroosmotic member 16 can be supplied with the drive liquid from the liquid suction member 52 as well as through the drive liquid absorbing member 86.

Furthermore, the drive liquid absorbing member 86 can be made of a material which closely contacts with the inlet electrode 18 and the liquid suction member 52, wherein the electroosmotic member 16 and the inlet electrode 18 are held in contact with the drive liquid absorbing member 86 with the inlet electrode 18 being interposed therebetween, i.e., the drive liquid absorbing member 86 can be held in contact with the electroosmotic member 16 and the inlet electrode 18, wherein the drive liquid absorbing member 86 is sandwiched between the electroosmotic member 16 and/or the inlet electrode 18 and the liquid suction member 52. In this case, the electroosmotic member 16 can be supplied with the drive liquid from the liquid suction member 52 through the drive liquid absorbing member 86.

If the inlet electrode 18 is made of a material whose wettability with respect to the drive liquid is not good, such as platinum-supported carbon, carbon fibers, stainless steel mesh, or the like, then it is desirable that the diameter of the pores 30 of the inlet electrode 18 be increased, and the electroosmotic member 16 and the drive liquid absorbing member 86 be held in direct contact with each other through the pores 30.

The second portion 12b includes a surface, which faces the outlet electrode 20, and which includes a central region where the fluid passage 14 is defined. The central region is provided as a convex region 90 projecting toward the outlet electrode 20, wherein the bubble isolator 40 is mounted on the convex region 90. The surface of the second portion 12b, which faces the outlet electrode 20, also includes a concave region 88 therein adjacent to the convex region 90, wherein the gas vent 42 is disposed in the concave region 88. The second portion 12b includes a plurality of holes 74 defined therein, which extend from the gas vent 42 downstream (on the left in FIG. 35) with respect to the direction in which the drive liquid flows.

In FIG. 35, the surface of the second portion 12b, which faces the outlet electrode 20, and which was originally a flat surface, is partially processed into the concave region 88, with a central region thereof being formed as the convex region 90. However, an area around the region of the bubble isolator 40 may be formed as the concave region 88, wherein the gas vent 42 is disposed in the concave region 88. Stated otherwise, at least the central region on which the bubble isolator 40 is disposed preferably should not be processed into the concave region 88.

If the bubble isolator 40 comprises a hydrophilic polyethersulfone membrane (having pores with a diameter of 0.2 [μm]), then a minimum bubble point of about 300 [kPa] is obtained. In this case, the bubble isolator 40 is bonded to the convex region 90, so as to provide a shield between the outlet chamber 28 and the portion of the fluid passage 14 within the small-diameter portion 24 (i.e., the downstream side of the fluid passage 14).

If the gas vent 42 comprises a PTFE porous membrane (having pores with a diameter of 0.1 [μm]), then a minimum water breakthrough point of 300 [kPa] or higher is obtained. In this case, the gas vent 42 is bonded to the concave region 88 in order to provide a shield between the outlet chamber 28 and the holes 74.

The bubble isolator 40 may be bonded to the convex region 90, and the gas vent 42 may be bonded to the concave region 88, by means of ultrasonic fusion, thermal fusion, adhesive bonding, laser beam welding, or the like.

The holes 74 are of a size that allows gas to be discharged from the outlet chamber 28 through the gas vent 42 at a predetermined rate. The holes 74 should preferably be of a circular shape or in the form of slits (e.g., having a hole diameter ranging from 0.1 [mm] to 2 [mm]) so that the tensile load applied to the PTFE membrane (the gas vent 42) under pressure in the outlet chamber 28 is not excessive. The edges of the holes 74 which are held against the PTFE membrane (i.e., the upstream edges of the holes 74) should preferably be beveled to prevent the PTFE membrane from being damaged.

The gap provided by the outlet chamber 28 along the direction of the fluid passage 14, i.e., the gap (interval) between the electroosmotic member 16 or the outlet electrode 20 and the gas vent 42, as well as the gap (interval) between the electroosmotic member 16 or the outlet electrode 20 and the bubble isolator 40, are important parameters affecting characteristics of the electroosmotic pump 100. Such gaps should preferably be within a range of from 1 [μm] to 3 [mm]. Specifically, the gap when surface tension is more dominant than gravitation should be about 3 [mm], whereas the gap when resistance posed by the fluid passage 14 is very large should be less than 1 [μm]. Therefore, in terms of the characteristics of the electroosmotic pump 100, it is preferable for each of the gaps to be set at appropriate values (e.g., about 1 [mm]) within a range from an upper value of 3 [mm] to a lower value of 1 [μm].

By setting the above gaps to a certain small value in the above range, the bubbles produced in the electroosmotic pump 100 can be limited to a certain size. Therefore, the pump operation is stabilized, and fluctuations of the pump flow rate are reduced when the gas is discharged from the outlet chamber 28 through the gas vent 42 and the holes 74. Furthermore, the dead volume of the electroosmotic pump 100 can be reduced. Moreover, since the effect that the gravitational force has on the discharging of gas is reduced by setting the gaps to a size in the above range, the pump characteristics remain unchanged no matter what direction the electroosmotic pump 100 may be oriented, with the result that the electroosmotic pump 100 is orientation-free. For example, the downstream side (the small-diameter portion 24) of the electroosmotic pump 100 may be oriented upwardly.

If bubbles are present in the outlet chamber 28, flow of the drive liquid within the fluid passage 14 may be stopped, or the flow rate of the drive liquid may be varied. However, the gas vent 42 disposed in the concave region 88 is effective to discharge bubbles, which are more likely to remain within the concave region 88 than on the convex region 90, efficiently from the gas vent 42 and through the holes 74. More specifically, since bubbles cannot pass through the bubble isolator 40 provided on the convex region 90, the bubbles move into the concave region 88 disposed alongside the convex region 90, and are discharged from the gas vent 42 through the holes 74, due to the internal pressure in the outlet chamber 28.

With the electroosmotic pump 100 according to the fifteenth embodiment, therefore, drive liquid, which has been introduced into the liquid suction member 52 by way of self-priming, is efficiently absorbed by the drive liquid absorbing member 86, and is quickly supplied to the electroosmotic member 16. When the DC power supply 34 applies a DC voltage to the inlet electrode 18 and the outlet electrode 20, the drive liquid in the electroosmotic member 16 is supplied from the outlet chamber 28, through the bubble isolator 40, and outside of the electroosmotic pump 100. Bubbles in the outlet chamber 28 are discharged from the gas vent 42 through the holes 74.

With respect to the electroosmotic pump 100 according to the fifteenth embodiment, it has been described that the drive liquid absorbing member 86 is sandwiched between the liquid suction member 52 and the electroosmotic member 16 and/or the first electrode 18 upstream from the electroosmotic member 16, or between the liquid suction member 52 and the first electrode 18, in the fluid passage 14. However, instead of this arrangement (or in addition to this arrangement), the drive liquid absorbing member 86 may be sandwiched between the liquid suction member 82 (see FIGS. 24, 25, and 31 through 34) and the electroosmotic member 16 and/or the second electrode 20 downstream from the electroosmotic member 16, or between the liquid suction member 82 and the second electrode 20, thus obtaining the same advantages as described above.

With respect to the electroosmotic pump 100 according to the fifteenth embodiment, it has been described that the gap between the electroosmotic member 16 or the outlet electrode 20 and the gas vent 42, as well as the gap between the electroosmotic member 16 or the outlet electrode 20 and the bubble isolator 40, are in a range of from 1 [$\mu$m] to 3 [mm] along the direction of the fluid passage 14. However, instead of this arrangement (or in addition to this arrangement), the gap between the electroosmotic member 16 or the inlet electrode 18 and the gas vent 44 (see FIGS. 1, 16, 17, and 22 through 25), as well as the gap between the electroosmotic member 16 or the inlet electrode 18 and the bubble isolator 72 (see FIGS. 6, 15, and 16), may be within a range of from 1 [$\mu$m] to 3 [mm], thus obtaining the same advantages as described above.

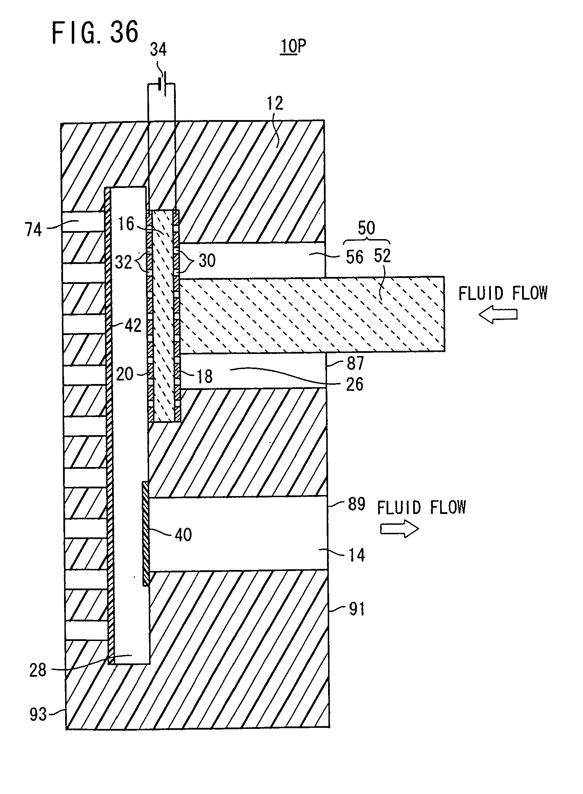

An electroosmotic pump 10P according to a sixteenth embodiment shall be described below with reference to FIG. 36.

The electroosmotic pump 10P according to the sixteenth embodiment differs from the electroosmotic pumps 10A through 100 according to the first through fifteenth embodiments (see FIGS. 1 through 35) in that both an upstream end (inlet 87) and a downstream end (outlet 89) of the fluid passage 14 are defined in a surface 91 (on the right in FIG. 36), whereas a gas vent 42 and holes 74 are defined in an opposite surface 93 (on the left in FIG. 36).

The electroosmotic pump 10P according to the sixteenth embodiment can be installed on (connected to) an installation surface such as a board or the like with enhanced ease, and can be reduced in overall height. Therefore, the electroosmotic pump 10P is suitable for use as a small-size surface-mounted pump in electronic devices, for example.

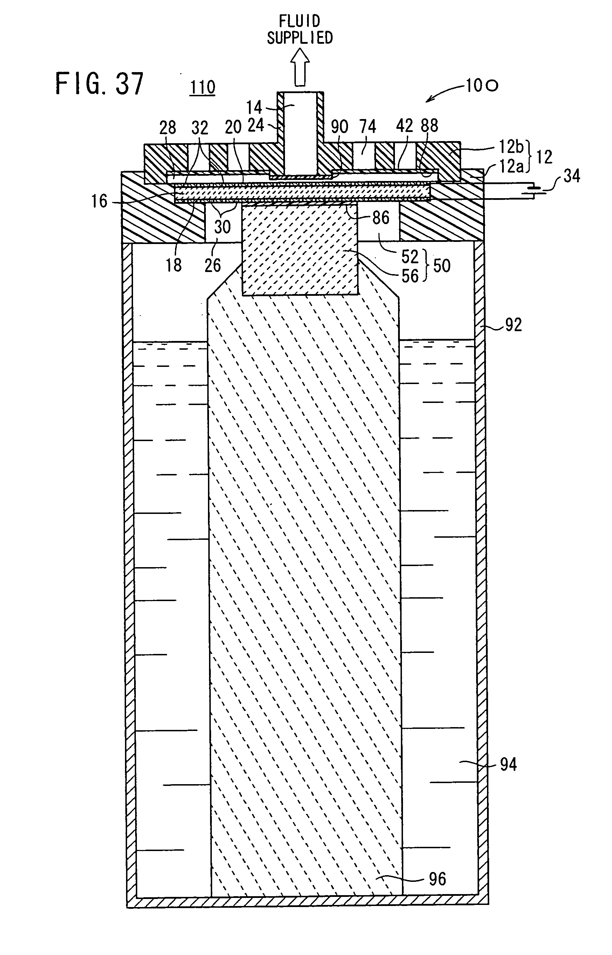

A liquid feeding device 110 incorporating the electroosmotic pump 100 according to the fifteenth embodiment (see FIG. 35) shall be described below with reference to FIG. 37.

The liquid feeding device 110 includes a tubular liquid container 92 (e.g., having a depth of 15 [cm]) having a closed bottom and an open top, wherein the liquid container 92 is filled with a liquid fuel 94 such as methanol or methanol water diluted with water. The electroosmotic pump 100 is mounted on top of the liquid container 92, with the downstream side (the small-diameter portion 24) thereof being oriented upwardly. The liquid container 92 houses a liquid fuel absorbing member 96 therein, which is capable of effectively absorbing the liquid fuel 94 and is coupled to the liquid suction member 52.

The liquid fuel absorbing member 96 should preferably be made of a hydrophilic porous material having a large porosity, or a fibrous material (e.g., a water-retentive material of natural pulp fibers). However, the liquid fuel absorbing member 96 may be made of the same material as the liquid suction member 52, or preferably, may be made of a material having a larger water retaining capability than the material that forms the liquid suction member 52.

The liquid fuel 94 absorbed in the liquid fuel absorbing member 96 is introduced by way of self-priming into the liquid suction member 52 through the liquid fuel absorbing member 96. Then the liquid fuel 94 is supplied to the electroosmotic member 16 through the drive liquid absorbing member 86. When the DC power supply 34 applies a DC voltage to the inlet electrode 18 and the outlet electrode 20, the liquid fuel 94 in the electroosmotic member 16 is supplied from the outlet chamber 28, through the bubble isolator 40, and outside of the electroosmotic pump 100, while the bubbles in the outlet chamber 28 are discharged from the gas vent 42 through the holes 74.

A liquid fuel 94, such as methanol or methanol water, is used as the fuel for a fuel cell system. Therefore, the liquid fuel 94, in the liquid container 92 can be supplied to the fuel cell system via a simple structure.

If the liquid fuel 94 comprises 100 [%] methanol, then even if bubbles are produced in the electroosmotic pump 100 when the liquid fuel 94 is supplied thereto, all of the bubbles are dissolved in the methanol because solubility of the bubbles in methanol is large. Therefore, the above gas vent structure (the gas vents 42 and the holes 74) may be dispensed with. If the liquid fuel 94 comprises methanol water, then since the presence of water increases the pump current and the solubility of the gas is small, generation of bubbles cannot be avoided. However, since the electroosmotic pump 100 has a gas vent structure made up of the gas vents 42 and the holes 74, the produced bubbles can efficiently be discharged from the electroosmotic pump 100.

Inasmuch as the electroosmotic pump 100 is an orientation-free pump, it can be supplied with liquid fuel 94 no matter what attitude the electroosmotic pump 100 is placed in. Thus, the electroosmotic pump 100 is suitable for use in a mobile device or the like. Since the liquid fuel absorbing member 96 is disposed in the liquid container 92, the liquid fuel 94 stored inside the liquid container 92 can be supplied out of the liquid container 92 in its entirety.

If the electroosmotic pump 100 and the liquid fuel absorbing member 96 are removably mounted in the liquid container 92, then the electroosmotic pump 100 and the liquid fuel absorbing member 96 may be combined with a fuel cell system, wherein only the liquid container 92 is replaced to enable the liquid fuel 94 to be replenished easily.

The electroosmotic pump 100 according to the fifteenth embodiment (see FIG. 35) has been described above as being incorporated in the liquid feeding device 110. However, the electroosmotic pumps 10A through 10N and 10P according to the first through fourteenth and sixteenth embodiments (see FIGS. 1 through 34 and 36) may also be used to supply the liquid fuel 94 out of the liquid container 92.

The electroosmotic pumps and the liquid feeding devices according to the present invention are not limited to the above embodiments, but various other arrangements may be employed without departing from the gist of the present invention.

INDUSTRIAL APPLICABILITY

With the electroosmotic pump according to the present invention, even when gas is produced in the vicinity of the second electrode as a result of application of voltage, the downstream liquid passing member, which is disposed downstream from the electroosmotic member, passes the drive liquid while preventing gas from passing therethrough. Therefore, gas is prevented from flowing into any of various fluid devices, such as a microfluid chip or the like, connected downstream from the electroosmotic member. Further, the electroosmotic pump can accurately control the position of the liquid that passes through the fluid device.

Furthermore, with the electroosmotic pump according to the present invention, since the upstream liquid self-priming mechanism and the electroosmotic member are held in contact with each other, when the upstream liquid self-priming mechanism is filled with drive liquid from outside, the drive liquid quickly permeates the electroosmotic member from the upstream liquid self-priming mechanism. When voltage is then applied to the electrodes, it is possible to reliably discharge the drive liquid from the electroosmotic member to the downstream side of the fluid passage. As a result, the self-priming capability of the electroosmotic pump is maintained, even if there is gas present in the vicinity of the first electrode.

With the electroosmotic pump according to the present invention, moreover, when voltage is applied to the first and second electrodes of the electroosmotic pump, the liquid stored in the liquid casing is supplied to the outside from the electroosmotic pump. Therefore, liquid can be supplied by means of a simple structure.

**Claims**

**1.** An electroosmotic pump (10A through 10I, 10K, 10L, 10N through 10P) including a first electrode (18) and a second electrode (20) disposed upstream and downstream, respectively, from an electroosmotic member (16) disposed in a fluid passage (14), wherein, when a voltage is applied to said first electrode (18) and said second electrode (20), a drive liquid (60, 94) is caused to flow in said fluid passage (14) through said electroosmotic member (16),
**characterized in that**
a downstream liquid passing member (40, 84), for preventing gas produced in the vicinity of said second electrode (20) when said voltage is applied from passing downstream, and for passing the drive liquid (60, 94) therethrough, is disposed downstream from said second electrode (20) on a downstream side of said fluid passage (14).

**2.** An electroosmotic pump (10A, 10D through 10I, 10K, 100, 10P) according to claim 1, **characterized in that** a downstream gas vent (42), for discharging said gas out of said fluid passage (14) to outside, is disposed between said electroosmotic member (16) and said downstream liquid passing member (40, 84).

3. An electroosmotic pump (10C, 10E, 10F, 10H, 10I, 10L, 10N) according to claim 1 or 2, **characterized in that** an upstream liquid passing member (72, 76), for preventing foreign matter from flowing into said electroosmotic member (16) and passing said drive liquid (60) therethrough when said voltage is applied, is disposed upstream from said electroosmotic member (16) on an upstream side of said fluid passage (14).

4. An electroosmotic pump (10F, 10H, 10I) according to claim 3, **characterized in that** an upstream gas vent (44), for discharging gas produced in the vicinity of said first electrode (18), to outside, when said voltage is applied, is disposed between said electroosmotic member (16) and said upstream liquid passing member (72, 76).

5. An electroosmotic pump (10A, 10G through 10I, 10K, 10L, 10N through 10P) according to any one of claims 1 through 4, **characterized in that** an upstream liquid self-priming mechanism (50), for self-priming said drive liquid (60, 94), is disposed on an upstream side of said fluid passage (14) in contact with one of said electroosmotic member (16) and said first electrode (18).

6. An electroosmotic pump (10I, 10N) according to any one of claims 1 through 5, **characterized in that** a downstream liquid self-priming mechanism (80), for self-priming said drive liquid (60), is disposed on a downstream side of said fluid passage (14) in contact with one of said electroosmotic member (16) and said second electrode (20).

7. An electroosmotic pump (10A, 10G through 10P) including a first electrode (18) and a second electrode (20) disposed upstream and downstream, respectively, from an electroosmotic member (16) disposed in a fluid passage (14), wherein, when a voltage is applied to said first electrode (18) and said second electrode (20), a drive liquid (60, 94) is caused to flow in said fluid passage (14) through said electroosmotic member (16), **characterized in that** an upstream liquid self-priming mechanism (50), for self-priming said drive liquid (60, 94), is disposed on an upstream side of said fluid passage (14) in contact with one of said electroosmotic member (16) and said first electrode (18).

8. An electroosmotic pump (10H, 10I, 10L through 10N) according to claim 7, **characterized in that** an upstream liquid passing member (76), for preventing foreign matter from flowing into said electroosmotic member (16) and passing said drive liquid (60) therethrough when said voltage is applied, is disposed upstream from said electroosmotic member (16) on an upstream side of said fluid passage (14).

9. An electroosmotic pump (10H, 10I) according to claim 8, **characterized in that** an upstream gas vent (44), for discharging gas produced in the vicinity of said first electrode (18) to outside when said voltage is applied, is disposed between said electroosmotic member (16) and said upstream liquid passing member (76).

10. An electroosmotic pump (10I, 10J, 10N) according to any one of claims 7 through 9, **characterized in that** a downstream liquid self-priming mechanism (80), for self-priming said drive liquid (60), is disposed on a downstream side of said fluid passage (14) in contact with one of said electroosmotic member (16) and said second electrode (20).

11. An electroosmotic pump (10A, 10G through 10I, 10K, 10L, 10N through 10P) according to any one of claims 7 through 10, **characterized in that** a downstream liquid passing member (40, 84), for preventing said gas from passing downstream and passing said drive liquid (60, 94) therethrough, is disposed downstream from said second electrode (20) on a downstream side of said fluid passage (14).

12. An electroosmotic pump (10A, 10G through 10I, 10K, 100, 10P) according to claim 11, **characterized in that** a downstream gas vent (42), for discharging gas produced in the vicinity of said second electrode (20) to outside when said voltage is applied, is disposed between said electroosmotic member (16) and said downstream liquid passing member (40, 84).

13. An electroosmotic pump (10A through 10I, 10K through 10P) according to any one of claims 1 to 6, 8, 9, 11, and 12, **characterized in that**
said liquid passing member (40, 84, 72, 76) is made of a hydrophilic material;
a gas pressure required for gas to pass through said liquid passing member (40, 84, 72, 76) is 1 [kPa] or higher; and
said liquid passing member (40, 84, 72, 76) has a thickness of 3 [mm] or less along a direction of said fluid passage (14).

**14.** An electroosmotic pump (10A, 10D through 10K, 100, 10P) according to any one of claims 2, 4, 9, and 12, **characterized in that**
said gas vent (42, 44) is made of a hydrophobic material disposed on a side wall of said fluid passage (14);
a pressure under which said drive liquid (60, 94) passes over said gas vent (42, 44) is smaller than a maximum pressure of said drive liquid (60, 94) when said electroosmotic pump is in operation; and
said gas vent (42, 44) has a thickness of 3 [mm] or less along the direction in which said gas passes.

**15.** An electroosmotic pump (10A, 10G through 10P) according to any one of claims 5 through 12, **characterized in that**
said liquid self-priming mechanism (50, 80) comprises a self-priming member (52, 82) disposed in the vicinity of said electroosmotic member (16) along said fluid passage (14), and an air vent (14, 56) disposed alongside said self-priming member (52, 82) and having an impregnation pressure that is different from the impregnation pressure of said self-priming member (52, 82); and
said self-priming member (52, 82) is self-primed with said drive liquid (60, 94) and supplies said drive liquid (60, 94) to said electroosmotic member (16), and said air vent (14, 56) discharges air remaining upstream from said electroosmotic member (16), to outside, based on an impregnation pressure difference between said self-priming member (52, 82) and said air vent (14, 56).

**16.** An electroosmotic pump (10G) according to claim 15, **characterized in that**
said self-priming member (52, 82) is made of a hydrophilic material and said air vent (56) is made of a hydrophobic material.

**17.** An electroosmotic pump (10A through 10I, 10K through 10P) according to any one of claims 1 to 6, 8, 9, and 11, **characterized in that**
said electroosmotic member (16) or said first electrode (18) and said upstream liquid passing member (72, 76) are spaced from each other by an interval of 3 [mm] or less along the direction of said fluid passage (14), and/or
said electroosmotic member (16) or said second electrode (20) and said downstream liquid passing member (40, 84) are spaced from each other by an interval of 3 [mm] or less along the direction of said fluid passage (14).

**18.** An electroosmotic pump (100) according to any one of claims 5 to 12, 15, and 16, **characterized in that**
a drive liquid absorbing member (86) made of a hydrophilic material, which closely contacts with said upstream liquid self-priming mechanism (50) and said electroosmotic member (16) or said first electrode (18), is disposed between said upstream liquid self-priming mechanism (50) and said electroosmotic member (16) or said first electrode (18), and/or
a drive liquid absorbing member (86) made of a hydrophilic material, which closely contacts with said downstream liquid self-priming mechanism (80) and said electroosmotic member (16) or said second electrode (20), is disposed between said downstream liquid self-priming mechanism (80) and said electroosmotic member (16) or said second electrode (20).

**19.** An electroosmotic pump (10P) according to any one of claims 1 through 18, **characterized in that**
said fluid passage (14) is defined in a pump casing (12) accommodating therein said electroosmotic member (16), said first electrode (18), and said second electrode (20); and
said fluid passage (14) has an upstream inlet (87) and a downstream outlet (89) defined in one surface (91) of said pump casing (12).

**20.** A liquid feeding device (110) comprising:

an electroosmotic pump (10A through 10P) according to any one of claims 1 through 19; and
a liquid container (92) filled with a liquid (94),
wherein said liquid (94) in said liquid container (92) is supplied to outside by said electroosmotic pump (10A through 10P).

FIG. 1

FLUID FLOW

FLUID FLOW

EP 1 873 532 A1

FIG. 2

FIG. 3

EP 1 873 532 A1

FIG. 4

FLUID FLOW

FLUID FLOW

FIG. 5

FLUID FLOW

FLUID FLOW

12

28

40

14

24

22

FIG. 6

FIG. 7

FIG. 8

IX(X)

42

12

28

74

18

FLUID FLOW

40

14

24

20

32

30

22  16

IX(X)

FIG. 9

FIG. 10

FIG. 11

FLUID FLOW

FIG. 12

FLUID FLOW

FIG. 13

FLUID FLOW

FIG. 14

FLUID FLOW

FIG. 15

10E

FLUID FLOW

FLUID FLOW

70
72
18
30
26
34
16
22
42
20
32
12
28
40
14
24

FIG. 16

10F

FLUID FLOW

FLUID FLOW

FIG. 17

EP 1 873 532 A1

FIG. 18

FLUID FLOW

FIG. 19

FLUID FLOW

FIG. 20

FLUID FLOW

FIG. 21

FIG. 22

FIG. 23

10H

FLUID FLOW

FLUID FLOW

52
(50)

70

76

18

44

34

42

12

28

40

24

14

26

30

20

32

22  16

FIG. 24

FLUID FLOW

FLUID FLOW

EP 1 873 532 A1

FIG. 25

FLUID FLOW → (arrow)

FLUID FLOW ← (arrow)

EP 1 873 532 A1

FIG. 26

FLUID FLOW

FLUID FLOW

EP 1 873 532 A1

FIG. 27

FLUID FLOW →

FLUID FLOW ←

EP 1 873 532 A1

FIG. 28

34

10L

50

12

28

56 52

70

18

76

FLUID FLOW

40

26

14

20

24

32

22  16

30

FLUID FLOW

EP 1 873 532 A1

FIG. 29

FLUID FLOW

FLUID FLOW

10M

50 { 56 52 }

70

44

34

42

12

28

14

24

18

30

26

20

32

22  16

FIG. 30

FLUID FLOW

FLUID FLOW

FIG. 31

FIG. 32

FLUID FLOW

FLUID FLOW

10N

50 { 52
56

70
18
76
34
12
28
80
82
14
24
32
20
22  16
30
26

FIG. 33

FLUID FLOW

FLUID FLOW

EP 1 873 532 A1

FIG. 34

FLUID FLOW

FLUID FLOW

EP 1 873 532 A1

FIG. 35

FIG. 36

34

10P

12

74

16

32

30

50

56  52

42

FLUID FLOW

20    18

87

26

89  FLUID FLOW

40

14

91

28

93

FIG. 37    110

FLUID
SUPPLIED
⇑

FIG. 38

FLUID FLOW

200

206

204

202

212

208

210

EP 1 873 532 A1

FIG. 39

FIG. 40

## INTERNATIONAL SEARCH REPORT

| International application No. |
|---|
| PCT/JP2006/306757 |

A. CLASSIFICATION OF SUBJECT MATTER
*G01N35/08*(2006.01), *G01N27/447*(2006.01)

According to International Patent Classification (IPC) or to both national classification and IPC

B. FIELDS SEARCHED

Minimum documentation searched (classification system followed by classification symbols)
*G01N35/08*(2006.01), *G01N27/447*(2006.01)

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | US 2005/003842 A1 (David Huber), 17 February, 2005 (17.02.05), (Family: none) | 1-20 |
| A | JP 2002-191905 A (Nipro Corp.), 10 July, 2002 (10.07.02), & US 2002/0121195 A1 & EP 1219333 A1 | 1-20 |
| A | JP 9-89840 A (Olympus Optical Co., Ltd.), 04 April, 1997 (04.04.97), (Family: none) | 1-20 |
| A | WO 00/62039 A1 (NORTHEASTERN UNIVERSITY), 19 October, 2000 (19.10.00), (Family: none) | 1-20 |

|☒| Further documents are listed in the continuation of Box C. | ☐ | See patent family annex. |
|---|---|---|---|

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27 June, 2006 (27.06.06) | 18 July, 2006 (18.07.06) |

| Name and mailing address of the ISA/ Japanese Patent Office | Authorized officer |
|---|---|
| Facsimile No. | Telephone No. |

Form PCT/ISA/210 (second sheet) (April 2005)

**INTERNATIONAL SEARCH REPORT**

| International application No. |
| --- |
| PCT/JP2006/306757 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | US 6406605 B1   (Donald R. Moles),<br>18 June, 2002 (18.06.02),<br>(Family: none) | 1-20 |
| A | WO 03/029731 A2   (BOARD OF TRUSTEES OF THE<br>LELAND STANFORD JUNIOR UNIVERSITY),<br>10 April, 2003 (10.04.03),<br>& JP 2005-525691 A        & US 2003/0062149 A1<br>& US 2003/0085024 A1    & US 2003/0164231 A1<br>& US 2004/0089442 A1 | 1-20 |
| A | WO 2004/007348 A   (OSMOTEX AS),<br>22 January, 2004 (22.01.04),<br>& WO 2004/007045 A1       & US 2005/0230251 A1<br>& CN 1668527 A            & CA 2489437 A1 | 1-20 |
| A | WO 2004/050243 A1   (EPOCAL INC.),<br>17 June, 2004 (17.06.04),<br>& JP 2006-508350 A       & US 2003/0127333 A1 | 1-20 |
| A | US 2004/0234378 A1   (James Lovette et al.),<br>25 November, 2004 (25.11.04),<br>& WO 2004/070303 A1      & WO 2004/070304 A2<br>& WO 2004/071139 A2      & WO 2004/076857 A2 | 1-20 |
| P,A | JP 2006-22807 A (Science Solutions<br>International Laboratory, Inc.),<br>26 January, 2006 (26.01.06),<br>& WO 2005/120696 A1 | 1-20 |

Form PCT/ISA/210 (continuation of second sheet) (April 2005)

## INTERNATIONAL SEARCH REPORT

International application No.

PCT/JP2006/306757

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
The "special technical feature" of claims 1-6, and 13-20 is "an electroosmosis pump where downstream side liquid passage members are provided on the downstream side of a flow path, on the downstream of a second electrode, the downstream side liquid passage members preventing gas that is produced in the vicinity of the second electrode from passing to the downstream side while allowing drive liquid to pass through the members."
On the other hand, the "special technical feature" of claims 7-12 is "an electroosmosis pump where an upstream side liquid self-filling mechanism capable of self-filling drive liquid is placed in contact with an electroosmosis material or a first electrode." (continued to extra sheet)

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest and, where applicable,
the                                          payment of a protest fee..

                                  ☐ The additional search fees were accompanied by the applicant's protest but the applicable protest
                                      fee was not paid within the time limit specified in the invitation.

                                  ☐ No protest accompanied the payment of additional search fees.

Form PCT/ISA/210 (continuation of first sheet (2)) (April 2005)

| INTERNATIONAL SEARCH REPORT | International application No. |
|---|---|
| | PCT/JP2006/306757 |

Continuation of Box No.III of continuation of first sheet(2)

There is no technical relationship, between the invention of claims 1-6, and 13-20 and the invention of claims 7-12, involving one or more of the same or corresponding special technical features.

Form PCT/ISA/210 (extra sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030068229 A
- US 3923426 A

- US 20040234378 A